# EUROPEAN PATENT APPLICATION

(11) **EP 4 712 460 A1**
(43) Date of publication of application: **18.03.2026**
(21) Application number: 24815912.1
(22) Date of filing: 31.05.2024
(51) Int. Cl.: H04M 3/42, H04W 4/16, H04M 3/436, H04M 7/00, H04M 1/72403, H04W 12/02, H04L 65/1069, H04L 65/1104, G06F 21/62, H04L 9/40

(54) **METHOD AND DEVICE FOR COMMUNICATING IN WIRELESS COMMUNICATION SYSTEM**

(30) Priority: 01.06.2023 KR 20230071005
(71) Applicant: Samsung Electronics Co., Ltd., Suwon-si, Gyeonggi-do 16677 (KR)
(72) Inventor: NGUYEN, Van Hai, Suwon-si Gyeonggi-do16677 (KR); NGUYEN, Van Khanh, Suwon-si Gyeonggi-do16677 (KR)
(74) Representative: Appleyard Lees IP LLP
(86) International application number: PCT/KR2024/007486
(87) International publication number: WO 2024/248538

(57) **Abstract**

The present disclosure relates to a method, performed by a first electronic device, of performing communication in a wireless communication system, and a device for performing communication. The method of performing communication may include receiving, from a second electronic device, a privacy call request message containing information about a first privacy level, identifying whether a privacy configuration corresponding to the first privacy level is supported, and when the privacy configuration is supported, performing a call with the second electronic device based on the privacy configuration.

## Description

### Technical Field

The present disclosure relates to a method and device for performing communication in a wireless communication system.

### Background Art

Calls and messages are widely used as a form of multi-factor authentication factors. As a result, they may be exposed to various security threats. Therefore, privacy protection of calls and messages may be required on general mobile communication networks.

### Disclosure of Invention

### Solution to Problem

According to an embodiment of the present disclosure, there is provided a method, performed by a first electronic device, of performing communication in a wireless communication system. The method, performed by the first electronic device, of performing communication may include receiving, from a second electronic device, a privacy call request message containing information about a first privacy level, identifying whether a privacy configuration corresponding to the first privacy level is supported, and when the privacy configuration is supported, performing a call with the second electronic device based on the privacy configuration.

According to an embodiment of the present disclosure, there is provided a method, performed by a second electronic device, of performing communication in a wireless communication system. The method, performed by the second electronic device, of performing communication includes transmitting, to a first electronic device, a privacy call request message containing information about a first privacy level, and when a privacy configuration corresponding to the first privacy level is supported, performing a call with the first electronic device based on the privacy configuration.

According to an embodiment of the present disclosure, a first electronic device for performing communication in a wireless communication system is provided. The first electronic device includes a transceiver and at least one processor connected to the transceiver. The at least one processor is configured to receive, from a second electronic device, a privacy call request message containing information about a first privacy level, identify whether a privacy configuration corresponding to the first privacy level is supported, and when the privacy configuration is supported, perform a call with the second electronic device based on the privacy configuration.

According to an embodiment of the present disclosure, a second electronic device for performing communication in a wireless communication system is provided. The second electronic device includes a transceiver and at least one processor connected to the transceiver. The at least one processor is configured to transmit, to a first electronic device, a privacy call request message containing information about a first privacy level, and when a privacy configuration corresponding to the first privacy level is supported, performing a call with the first electronic device based on the privacy configuration.

### Brief Description of Drawings

FIG. 1 is a diagram illustrating privacy communication according to an embodiment of the present disclosure.
FIG. 2 is a flowchart of a method of performing a privacy call, according to an embodiment of the present disclosure.
FIG. 3 is a flowchart of a method of performing a privacy call, according to an embodiment of the present disclosure.
FIG. 4A illustrates a process in which a first electronic device performs a privacy call, according to an embodiment of the present disclosure.
FIG. 4B illustrates a process in which a second electronic device performs a privacy call, according to an embodiment of the present disclosure.
FIG. 5A illustrates a process in which a first electronic device performs a privacy call, according to an embodiment of the present disclosure.
FIG. 5B illustrates a process in which a second electronic device performs a privacy call, according to an embodiment of the present disclosure.
FIGS. 6A, 6B, and 6C are diagrams illustrating methods of determining a call acceptance condition, according to an embodiment of the present disclosure.
FIG. 7A is a flowchart of a method of requesting a privacy call before a call, according to an embodiment of the present disclosure.
FIG. 7B is a flowchart of a method of requesting a privacy call before a call, according to an embodiment of the present disclosure.
FIG. 8A is a diagram illustrating a case in which a first electronic device receives a request for a privacy call during a call, according to an embodiment of the present disclosure.
FIG. 8B is a diagram illustrating a case in which a second electronic device requests a privacy call during a call, according to an embodiment of the present disclosure.
FIG. 9A illustrates a first electronic device handling call data, according to an embodiment of the present disclosure.
FIG. 9B illustrates a first electronic device handling call data, according to an embodiment of the present disclosure.
FIG. 10A is a diagram illustrating a network performing a privacy call, according to an embodiment of the present disclosure.
FIG. 10B is a diagram illustrating a network performing a privacy call, according to an embodiment of the present disclosure.
FIG. 11 is a diagram illustrating a privacy message service, according to an embodiment of the present disclosure.
FIG. 12 is a diagram illustrating a second electronic device performing a privacy call, according to an embodiment of the present disclosure.
FIG. 13 is a diagram illustrating a configuration of a first electronic device according to an embodiment of the present disclosure.
FIGF. 14 is a diagram illustrating a configuration of a second electronic device according to an embodiment of the present disclosure.
FIG. 15 is a diagram illustrating a configuration of a network according to an embodiment of the present disclosure.

### Mode for the Invention

In the present disclosure, the expressions "at least one of a, b or c" and "at least one of a, b, and c" may each indicate only "a", only "b", only "c", both "a and b", both "a and c", both "b and c", all of "a, b, and c", or variations thereof.

An embodiment of the present disclosure will be described more fully hereinafter with reference to the accompanying drawings so that the embodiment may be easily implemented by one of ordinary skill in the art. However, the present disclosure may be implemented in different forms and should not be construed as being limited to an embodiment set forth herein.

The terminology used herein may be a general term currently widely used in the art based on functions described in the present disclosure, but it may mean various other terms according to an intention of a technician engaged in the art, precedent cases, advent of new technologies, etc. Thus, the terms used herein should be defined not by simple appellations thereof but based on the meaning of the terms together with the overall description of the present disclosure.

In addition, the terms used herein are only used to describe a particular embodiment, and are not intended to limit the present disclosure.

Throughout the specification, it will be understood that when a part is referred to as being "connected" or "coupled" to another part, it may be "directly connected" to or "electrically coupled" to the other part with one or more intervening elements therebetween.

The use of the terms "the" and similar referents used in the specification, especially in the following claims, are to be construed to cover both the singular and the plural. Furthermore, operations of a method according to the present disclosure described herein may be performed in any suitable order unless the order of the operations is clearly specified herein. The present disclosure is not limited to the described order of the operations.

Expressions such as "in some embodiments" or "in an embodiment" described in various parts of this specification do not necessarily refer to the same embodiment(s).

Some embodiments of the present disclosure may be described in terms of functional block components and various processing operations. Some or all of such functional blocks may be implemented by any number of hardware and/or software components that execute specific functions. For example, functional blocks of the present disclosure may be implemented by one or more microprocessors or by circuit components for performing certain functions.

Furthermore, for example, functional blocks of the present disclosure may be implemented in various programming or scripting languages. The functional blocks may be implemented using various algorithms executed by one or more processors. Furthermore, the present disclosure may employ techniques of the related art for electronics configuration, signal processing, and/or data processing. The terms such as "mechanism", "element", "means", and "construction" may be used in a broad sense and are not limited to mechanical or physical components.

Furthermore, connecting lines or connectors shown in various figures are intended to represent exemplary functional relationships and/or physical or logical couplings between components in the figures. In an actual device, connections between components may be represented by various alternative or additional functional relationships, physical connections, or logical connections.

In addition, terms such as "unit", "module", etc., described herein refer to a unit for processing at least one function or operation and may be implemented as hardware or software, or a combination of hardware and software.

As used herein, the term 'unit' denotes a software element or a hardware element such as a field-programmable gate array (FPGA) or an application-specific integrated circuit (ASIC), and the unit" performs certain functions. However, the term 'unit' is not limited to software or hardware. The 'unit' may be configured to be in an addressable storage medium or configured to operate one or more processors. Thus, the term 'unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables.

Functions provided by the elements and 'units' may be combined into a smaller number of elements and 'units', or may be further divided into additional elements and 'units'. Furthermore, the elements and 'units' may be embodied to reproduce one or more central processing units (CPUs) in a device or security multimedia card. In addition, in an embodiment, the 'unit' may include one or more processors.

Hereinafter, for convenience of description, some terms and names defined in the 3rd Generation Partnership Project (3GPP) Long Term Evolution (LTE) specifications, Request for Comments (RFC) 3261, and RFC 2119 may be used. However, the present disclosure is not limited by the terms and names but may also be applied equally to systems that comply with other standards. That is, stages or parts that are not described in embodiments of the present disclosure in order to clearly reveal the technical idea of the present disclosure may be supported by the above documents.

Furthermore, although terms containing an ordinal number such as "first" or "second" may be used herein to describe various elements or components, the elements or components should not be limited by the terms. The terms are only used to distinguish one element or component from another element or component.

For example, although a first electronic device and a second electronic device are described in the present specification, they are used only to distinguish between different devices and should not be limited thereby.

The first electronic device may operate as a transmitting device and may include, for example, a server, a base station, or a terminal. The first electronic device includes a mobile originating (or MO) or calling party. The second electronic device may perform operations as a receiving device and may include, for example, a server, a base station, or a terminal. The second electronic device includes a mobile terminating (or MT) or called party.

Hereinafter, a base station is an entity that performs resource allocation for a terminal and may be at least one of a Node B, a BS, an eNode B (eNB), a next-generation Node B (gNode B or gNB), or an xNode B (where x is any letter in the alphabet, including g or e), a wireless access unit, a base station controller, a satellite, an airborne vehicle, or a node on a network. A server may include a network, a service provider, an operator, etc.

Furthermore, a terminal may include at least one of a user equipment (UE), a mobile station (MS), a vehicle, a satellite, an airborne vehicle, a cellular phone, a smartphone, a computer, a laptop personal computer (PC), a netbook computer, a digital camera, a navigation device, a wearable device, a smart watch, a home network system (or a network 30), a security system, a medical device, or a multimedia system capable of performing a communication function.

Hereinafter, the operation principle of a preferred embodiment of the present disclosure will be described in detail with reference to the accompanying drawings. The same components in the drawings are shown with the same reference numbers wherever possible, even if they appear in different drawings, and in describing the present disclosure below, when it is determined that detailed descriptions of related known functions or configurations may unnecessarily obscure the essence of the present disclosure, the detailed descriptions will be omitted.

Furthermore, terms described below are defined by taking into account functions described in the present disclosure and may vary depending on a user's or operator's intent or conventions. Therefore, definition of the terms should be made based on the overall descriptions in the present specification.

In addition, embodiments of the present disclosure may be applied to other communication systems having a technical background or channel configuration similar to that in the embodiments described below. It will also be understood by those skilled in the art that the embodiments of the present disclosure may be applied to other communication systems through some modifications that do not significantly depart from the scope of the present disclosure.

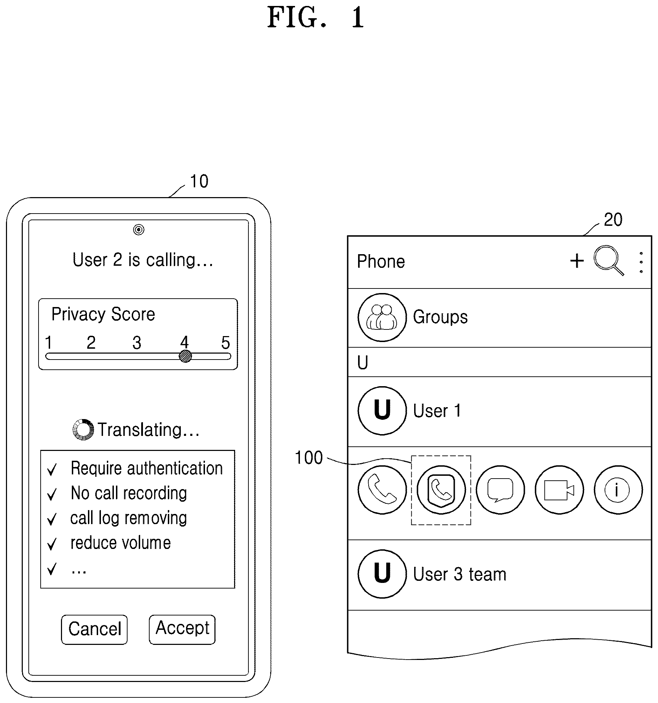

FIG. 1 is a diagram illustrating privacy communication according to an embodiment of the present disclosure.

Privacy communication may include at least one of a privacy call, a privacy text, and privacy content. For convenience of description, a privacy call is used as an example below, but various embodiments of the present disclosure may be similarly applied to a privacy text and privacy content such as videos and images.

A first electronic device 10 mayinclude a mobile-originating (or MO), or calling party. The first electronic device 10 may perform an operation as a mobile-terminating device. The first electronic device 10 may include, for example, a server, a base station, or a terminal (or UE). The second electronic device 20 may include a mobile-terminating (or MT), or called party. The second electronic device 20 may operate as a mobile-originating device. The second electronic device 20 may include, for example, a server, a base station, or a UE.

The second electronic device 20 may obtain a user input for requesting a privacy call.

Referring to FIG. 1, the second electronic device 20 may identify whether a user 2 of the second electronic device 20 requests a privacy call from a user 1 of the first electronic device 10. When the user input corresponds to a privacy request user interface (UI) 100, the second electronic device 20 may determine that a privacy call request to the first electronic device 10 is required.

When the user input for requesting the privacy call is obtained, the second electronic device 20 may transmit a privacy call request message to the first electronic device 10. The privacy call request message may include information about a privacy level.

The information about the privacy level may indicate the degree of privacy protection required and may include at least one of a privacy level, a privacy score, a privacy scope, a privacy grade, or a confidentiality level.

The privacy level may include numerical values within a specified (or configured) scale. The privacy level may be expressed as a 100-grade point, a percentage, etc., and is not limited to the stated examples. For example, privacy {level 5} may indicate a higher degree of privacy protection than privacy {level 3}.

The privacy level may be expressed in terms of importance of the privacy level. For example, the privacy level may be expressed as an alphabetical grade or as at least one of high, medium, low, or critical, and is not limited to the stated examples. For example, privacy {high} may indicate a higher degree of privacy protection than privacy{medium}.

A privacy request message may be included in a Session Initiation Protocol (SIP) message. For example, the privacy request message may be included in at least one of a SIP INVITE message, a SIP UPDATE message, a SIP RE-INVITE message, or a Real-time Transport Protocol (RTP) data message. In the present disclosure, the privacy request message may include the privacy call request message.

A SIP message to be used may be determined based on the time when privacy is configured, such as when the privacy request message is transmitted.

For example, as shown in [Table 1] below, when the second electronic device 20 starts making a call to the first electronic device 10, the privacy request message may be included in the SIP INVITE message. When a call of the first electronic device 10 is ringing, the privacy request message may be included in the SIP UPDATE message.

When a call between the second electronic device 20 and the first electronic device 10 is being connected, the privacy request message may be included in at least one of the SIP RE-INVITE message or the RTP data message.

Although [Table 1] shows examples of SIP messages used, [Table 1] shows only an exemplary structure, and the present disclosure is not limited to [Table 1].

**[Table 1]**

| | |
|---|---|
| time when privacy is configured | SIP message |
| Start making a call | SIP INVITE |
| During call ringing | SIP UPDATE |
| During a call connected | SIP RE-INVITE or RTP data message |

Information about a privacy level may be included in a Call-Info header field of a SIP message. For example, as shown in [Table 2] below, the privacy level may be indicated or configured using call-reason within the Call-Info header field of a SIP message. Although [Table 2] shows an example of a privacy request message, [Table 2] shows only an exemplary structure thereof, and the present disclosure is not limited to [Table 2].

**[Table 2]**

| |
|---|
| SIP INVITE (or RE-INVITE) with Privacy level |
| INVITE sip:bob@biloxi.com SIP/2.0 |
| Via: SIP/2.0/UDP pc33.atlanta.com;branch=z9hG4bK776asdhds |
| Max-Forwards: 70 |
| To: Bob <sip:bob@biloxi.com> |
| From: Alice <sip:alice@atlanta.com>;tag=1928301774 |
| Call-ID: a84b4c76e66710@pc33.atlanta.com |
| CSeq: 314159 INVITE |
| Contact: <sip:alice@pc33.atlanta.com> |
| Content-Type: application/sdp |
| Content-Length: 142 |
| Call-info: call-reason="Privacy 5" |

The first electronic device 10 may receive the privacy call request message including the information about the privacy level. The first electronic device 10 may identify at least one privacy configuration corresponding to the privacy level.

Referring to FIG. 1, when the privacy level indicates {privacy score 4}, the first electronic device 10 may identify a privacy configuration {configuration 4} corresponding to {privacy score 4}.

Referring to FIG. 1, {configuration 4} may include a configuration indicating an authentication request, a configuration indicating disabling of a call recording function, a configuration indicating removal of a call log, a configuration indicating reduction of a volume, etc.

A privacy configuration corresponding to each privacy level may be set up by at least one of a manufacturer of the first electronic device 10, a manufacturer of the second electronic device 20, a user, an operator, a service provider, and the network 30.

A privacy configuration corresponding to each privacy level may be set up by a user of the first electronic device 10 and a user of the second electronic device 20.

According to an embodiment of the present disclosure, the first electronic device 10 may be assigned at least one of a calculation formula, a weight, or a factor value for determining a privacy configuration based on a privacy level.

The at least one of the calculation formula, weight, or factor value may be determined based on a user's configuration or an artificial intelligence (AI) model. For example, while the user of the first electronic device 10 or the user of the second electronic device 20 is using the corresponding electronic device, at least one of the calculation formula, weight, or factor value may change based on at least one of the user's configuration or the Al model.

At least one privacy configuration may be identified based on the time when a privacy request is made. For example, referring to FIG. 1, a configuration related to an authentication request may correspond to a privacy configuration before a call, a configuration for adjusting an audio volume may correspond to a privacy configuration during a call, and a configuration indicating disabling of call recording and removal of a call log may correspond to a privacy configuration after a call.

At least one privacy configuration may be distinguished based on a policy group or function. For example, each privacy configuration may include at least one of a configuration related to call acceptance, a configuration related to audio control, a configuration related to display control, a configuration related to call control, or a configuration related to call data handling.

The configuration related to call acceptance may include information indicating at least one of an identifier (ID) verification request, account information verification request, or authentication request for the first electronic device 10.

The configuration related to audio control may include at least one of a configuration for a speaker of the first electronic device 10, a configuration for a device connected to the first electronic device 10 by wire or wirelessly, such as via Bluetooth (or BT), Wi-Fi, or ultra-wideband (UWB), and other audio configurations.

The configuration for the speaker of the first electronic device 10 may include information indicating whether to deactivate or activate the speaker, and information indicating volume control such as lowering or raising a volume of the speaker. The configuration for a wired device may include information indicating whether audio is disabled ( or 'deactivated') or enabled (or 'activated') for at least one of one or more wired devices.

The configuration for a wirelessly connected device may include at least one of information indicating whether to disable (or 'deactivate') or enable (or 'activate') audio for at least one of one or more wirelessly connected devices and information indicating disconnection (or release) with respect to at least one of the wirelessly connected devices. The wirelessly connected devices may include terminals (or UEs).

The configuration related to display control may include at least one of a configuration for a display of the first electronic device 10, a configuration for a device connected to the first electronic device 10 via a wired connection, a configuration for a device connected via a wireless connection, such as a configuration for a device connected via Bluetooth BT, Wi-Fi, or UWB, and other display configurations.

The configuration for the display of the first electronic device 10 may include information indicating adjustments related to the display, such as activating or deactivating the display, decreasing or increasing at least one of a brightness or resolution of the display, etc. The configuration for a wired device may include information indicating whether to deactivate or activate the display for at least one of one or more wired devices.

The configuration for a wirelessly connected device may include information indicating whether to deactivate or activate the display for at least one of one or more wirelessly connected devices, and information indicating disconnection (or release) with respect to at least one of the wirelessly connected devices. The wirelessly connected devices may include terminals (or UEs).

The configuration related to call control may include information indicating whether to enable (or activate) or disable (or deactivate) at least one of a call forwarding function, a call transferring function, a call continuity function, a function for switching to a video call, a function for switching to a voice call, or a Rich Communication Services (RCS) function.

The configuration related to call data handling includes at least one of a configuration for call recording processing and a configuration for call log history processing.

The configuration related to call data handling may include information indicating that call data is to be erased, that call data is to be encrypted, or that call data is to be moved to a secure region.

Referring to FIG. 1, the configuration related to an authentication request may correspond to the configuration related to call acceptance, the configuration for adjusting an audio volume may correspond to the configuration related to audio control, and the configuration indicating disabling of call recording and removal of a call log may correspond to the configuration related to call data handling.

A privacy configuration may include information about at least one of privacy importance, category, configuration details, or privacy level. Although [Table 3] shows examples of privacy importance, category, configuration details, and privacy level, [Table 3] shows only an exemplary structure, and the present disclosure is not limited to Table 3.

**[Table 3]**

| Privacy importance | Category | Configuration details | Example of privacy levels | | |
|---|---|---|---|---|---|
| | | | High | Medium | Low |
| High (prefer for end user) | (During a call) Audio control | - Speaker | - Request to deactivate speaker | - Configurable | NA |
| | | - Wired device | | | |
| | | - Wirelessly connected device (BT/Wifi/UWB) | | | |
| | | | - Change the audio path or audio configuration | | |
| | | - Other audio configurations | | | |
| Low | Call control (during call) | - Call forwarding - Call transferring - Switching to video call | - Disable call forwarding | - Configurable | NA |
| | | - Switching to voice call | - Disable call transferring | | |
| | | - RCS service | - Block switching to video call | | |
| | | | - Block other services | | |
| Medium (prefer for end user) | (After call) call data handling | - Call recording - Call log history | - Call information is not saved | - Configurable | NA |
| Critical (maybe request for B2B call only) | (Before call) call acceptanc e | - MT device ID | - ID request available | NA | NA |
| | | - Authentication request | | | |
| | | | - Authentication request available | | |

A privacy level or privacy configuration may be mapped to a contact, and the first electronic device 10 may store information about at least one of the contact and the privacy level or privacy configuration mapped to the contact. For example, when contacts of the first electronic device 10 include a contact of the second electronic device 20 (or user 2) and a contact of a third electronic device (or user 3), the first electronic device 10 may store contact 2 and {level 2} mapped to the contact 2 in a contact database, and store contact 3 and {level 2, level 3} mapped to the contact 3 in the contact database.

The first electronic device 10 may request an input from the user, regarding whether to accept the privacy configuration. The first electronic device 10 may identify whether the user is to accept the privacy configuration based on the user's input.

When there are one or more privacy configurations corresponding to a privacy level, the first electronic device 10 may provide information about the one or more privacy configurations to the user through a user interface (UI) or framework. The first electronic device 10 may identify, based on the user's input, the privacy configuration selected by the user.

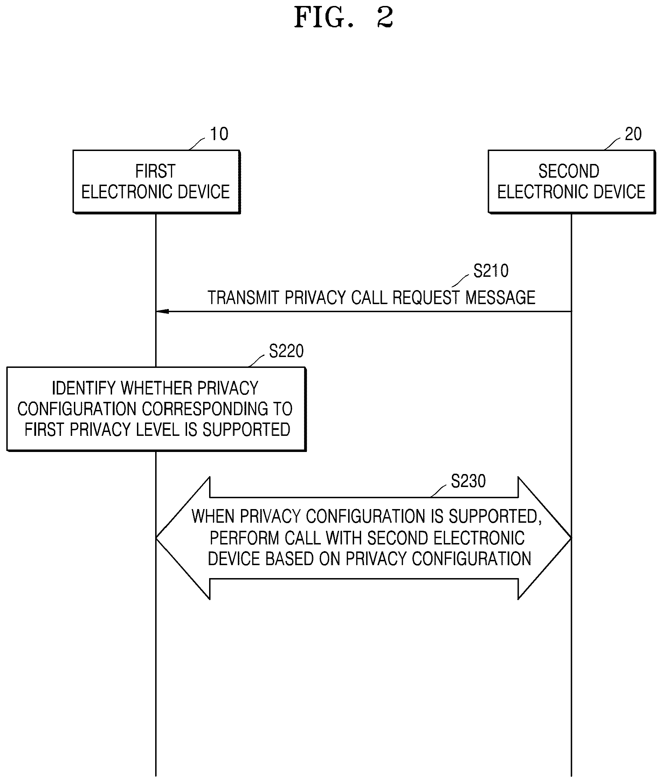

FIG. 2 is a flowchart of a method of performing a privacy call, according to an embodiment of the present disclosure.

In operation S210, the first electronic device 10 receives a privacy call request message from the second electronic device 20.

The privacy request message may be included in a SIP message. For example, the privacy request message may be included in at least one of a SIP INVITE message, a SIP UPDATE message, a SIP RE-INVITE message, or an RTP data message. Operation S210 may correspond to operation S310, and repeated descriptions may be omitted.

In operation S220, the first electronic device 10 identifies whether a privacy configuration for privacy protection corresponding to a first privacy level is supported.

The details regarding a privacy level and a privacy configuration may correspond to those related to the privacy level and privacy configuration described with reference to FIG. 1, and repeated descriptions may be omitted.

The first electronic device 10 may identify whether a privacy configuration corresponding to a privacy level is supported, based on at least one of whether the first electronic device 10 provides a privacy configuration function for a privacy call and whether applicable privacy configurations of the first electronic device include the corresponding privacy configuration.

When the first electronic device 10 is unable to process the privacy request message, such as a Call-Info field of a SIP message, it may be identified that the first electronic device 10 does not provide a privacy configuration function.

The first electronic device 10 may identify at least one privacy configuration corresponding to a privacy level. For example, when the first electronic device 10 has privacy configurations preconfigured as {configuration 1, configuration 2, ..., configuration n} and information about the privacy level indicates {level 1}, the first electronic device 10 may identify privacy configurations {configuration 1, configuration 2} corresponding to {level 1}.

The first electronic device 10 may determine whether a privacy configuration is configurable or applicable based on whether applicable privacy configurations include the corresponding privacy configuration.

For example, when the information about the privacy level indicates {level 3} and {configuration 3} corresponds to {level 3}, and the applicable privacy configurations of the first electronic device 10 include {configuration 1, configuration 2, configuration 3}, the first electronic device 10 may determine that a privacy configuration corresponding to the privacy level is configurable. When the applicable privacy configurations of the first electronic device 10 include {configuration 1, configuration 2}, the first electronic device 10 may determine that a privacy configuration corresponding to the privacy level is not configurable.

For example, when the corresponding privacy configuration requires restrictions on audio sharing with others and the user of the first electronic device 10 is in a car with another person or in an open space, such as a public place or a conference room, with others and only speakers that can be heard by the others are present , the first electronic device 10 may determine that the applicable privacy configurations do not include the corresponding privacy configuration.

When the privacy configuration corresponding to the privacy level is not supported, the first electronic device 10 may reject a privacy call request from the second electronic device 20.

When the privacy configuration corresponding to the privacy level is not supported, the first electronic device 10 may transmit, to the second electronic device 20, at least one of information explaining that the privacy configuration is not supported, information requesting a callback, and information requesting a change in a contact method to a message or the like.

When the privacy level corresponding to the privacy configuration is not supported, the first electronic device 10 may transmit a message requesting a change of the privacy level to the second electronic device 20. The requesting of a change of a privacy level may correspond to operations S325, S330a, S340a, and S330b, and repeated descriptions may be omitted.

In operation S230, when the privacy configuration is supported, the first electronic device 10 may perform a call with the second electronic device 20 based on the privacy configuration.

The privacy configuration may include at least one of a configuration related to call acceptance, a configuration related to audio control, a configuration related to display control, a configuration related to call control, or a configuration related to call data handling, and may correspond to the privacy configuration described with reference to FIG. 1.

The first electronic device 10 may determine, based on the privacy configuration, whether a call acceptance condition is satisfied. Based on whether the call acceptance condition is satisfied, the first electronic device 10 may transmit a message including at least one of a SIP 180 message or a SIP 183 message to the second electronic device 20.

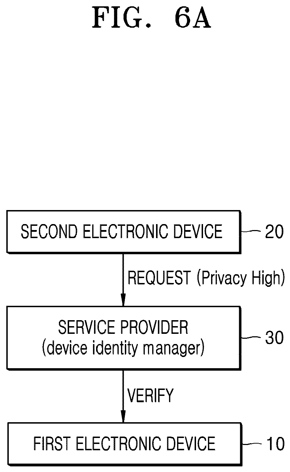

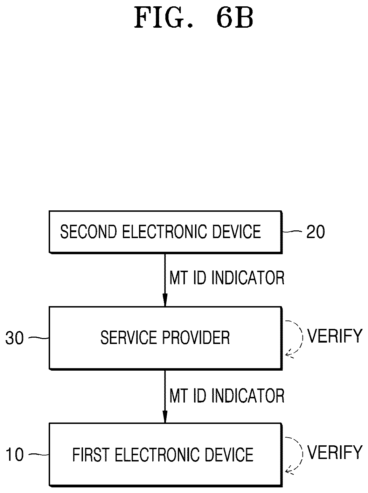

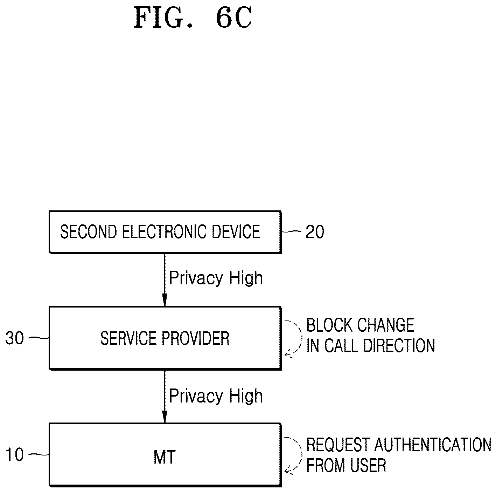

The privacy configuration may include a configuration related to call acceptance. The configuration related to call acceptance may be associated with at least one of verification of an ID of the first electronic device 10, verification of account information related to the first electronic device 10, and an authentication result. The determining of the call acceptance condition may correspond to the determining of a call acceptance condition illustrated in FIGS. 6A, 6B, and 6C, operation S230, and operation S430a, and repeated descriptions may be omitted.

The first electronic device 10 may configure an audio mode of the first electronic device 10 based on at least one of the privacy configuration, information about the surrounding environment of the first electronic device 10, or information about an audio device connected to the first electronic device 10.

The privacy configuration may include a configuration related to audio control. The configuration related to audio control may include at least one of a configuration for a speaker of the first electronic device 10, a configuration for a device connected by wire to the first electronic device 10, a configuration for a device connected wirelessly thereto, and other audio configurations.

The first electronic device 10 may obtain information about the surrounding environment of the first electronic device 10 or the audio device. For example, the first electronic device 10 may obtain information about the surrounding environment thereof by using a sensor of the first electronic device 10. The first electronic device 10 may receive information about the surrounding environment of the first electronic device 10 or the audio device from a device connected to the first electronic device 10.

The first electronic device 10 may identify whether a person other than the user of the first electronic device 10 is present, based on the information about the surrounding environment. When the other person is identified as being present, the first electronic device 10 may configure, based on the privacy configuration, at least one of disabling a speaker function of the first electronic device 10, adjusting the audio volume, or deactivating the connected audio device.

The configuring of the audio mode of the first electronic device 10 may correspond to operation S460a, operation S470a, operation S410c, and operation S420c, and repeated descriptions may be omitted.

The first electronic device 10 may configure a display mode of the first electronic device 10 based on at least one of the privacy configuration, information about the surrounding environment of the first electronic device 10, or information about a display device connected to the first electronic device 10.

The privacy configuration may include a configuration related to display control. The configuration related to display control may include at least one of a configuration for a display of the first electronic device 10, a configuration for a device connected to the first electronic device 10 by wire, a configuration for a device connected wirelessly thereto, and other display configurations.

The first electronic device 10 may obtain information about the surrounding environment of the first electronic device 10 or the display device. For example, the first electronic device 10 may obtain information about the surrounding environment thereof by using a sensor of the first electronic device 10. The first electronic device 10 may receive information about the surrounding environment of the first electronic device 10 or the display device from a device connected to the first electronic device 10.

The first electronic device 10 may identify whether a person other than the user of the first electronic device 10 is present, based on the information about the surrounding environment. When the other person is identified as being present, the first electronic device 10 may configure, based on the privacy configuration, at least one of disabling a display function of the first electronic device 10, adjusting a brightness, adjusting a resolution, or deactivating the connected display device.

The configuring of the display mode of the first electronic device 10 may correspond to operation S460a, operation S470a, operation S410c, and operation S420c, and repeated descriptions thereof may be omitted.

The first electronic device 10 may configure, based on the privacy configuration, call control regarding whether to enable (or activate)/disable (or deactivate) at least one of a call forwarding function, a call transferring function, a call continuity function, a function for switching to a video call, a function for switching to a voice call, or an RCS function.

The privacy configuration may include a configuration related to call control. The configuration related to call control may include information indicating whether to disable (or deactivate)/enable (or activate) at least one of the call forwarding function, call transferring function, call continuity function, video call function, voice call function, or RCS function. The configuring of call control may correspond to operation S440a, and repeated descriptions may be omitted.

The first electronic device 10 may handle call data based on the privacy configuration. The call data may include at least one of call log history information and call recording information. The privacy configuration may include a configuration related to call data handling.

The first electronic device 10 may handle call data by erasing the call data, encrypting the call data, or moving the call data to a secure region based on the privacy configuration.

When a call with the second electronic device 20 is terminated, the first electronic device 10 may update privacy level information corresponding to the second electronic device 20. The privacy level information may include at least one of information about a call cancellation history corresponding to at least one privacy level, or information about a call completion history corresponding to the at least one privacy level.

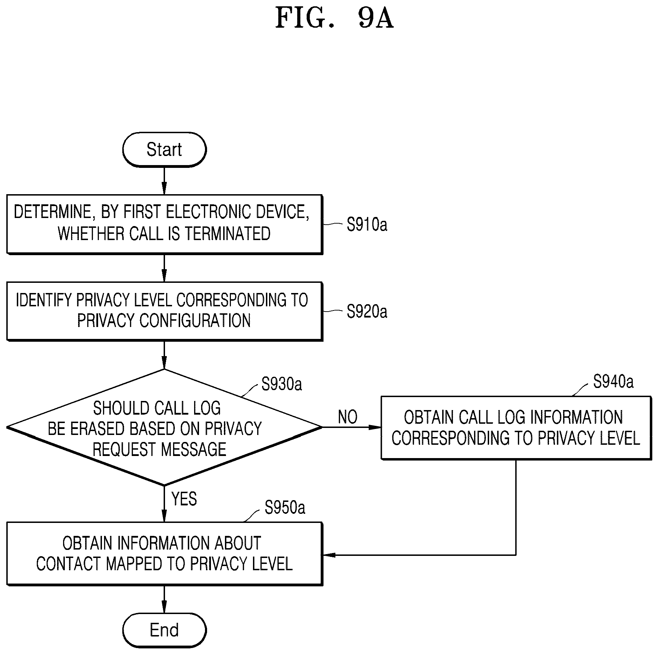

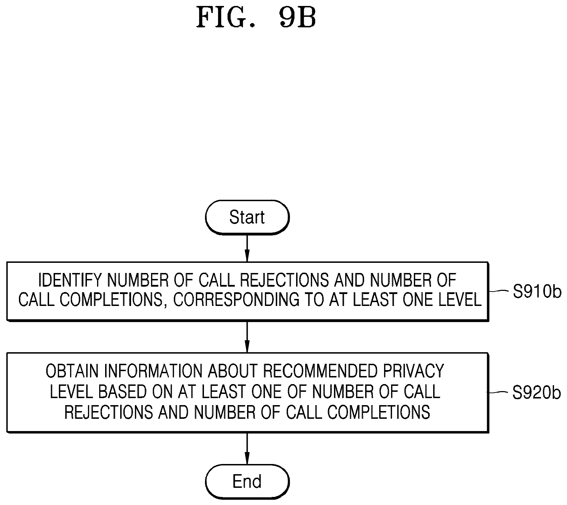

Based on the privacy level information, information about a recommended privacy level corresponding to the second electronic device 20 may be obtained. The handling of call data based on privacy configuration may correspond to the contents of FIGS. 9A and 9B, and repeated descriptions may be omitted.

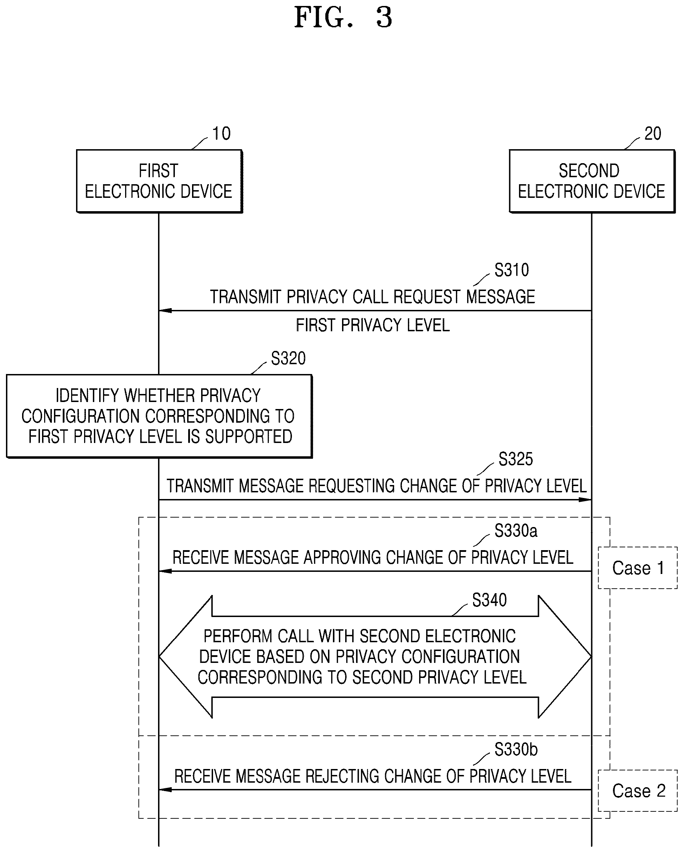

FIG. 3 is a flowchart of a method of performing a privacy call, according to an embodiment of the present disclosure.

In operation S310, the first electronic device 10 receives a privacy call request message from the second electronic device 20.

The privacy request message may be included in a SIP message. For example, the privacy request message may be included in at least one of a SIP INVITE message, a SIP UPDATE message, a SIP RE-INVITE message, or an RTP data message.

The privacy request message may include information about a first privacy level. For example, the first privacy level may indicate {level 5} or {high}. Operation S310 may correspond to operation S210, and repeated descriptions may be omitted.

In operation S320, the first electronic device 10 identifies whether a privacy configuration corresponding to the first privacy level is supported.

The first electronic device 10 may identify whether a privacy configuration corresponding to a privacy level is supported, based on at least one of whether the first electronic device 10 provides a privacy configuration function for a privacy call, whether the corresponding privacy configuration is configured, or whether a privacy call can be performed based on the privacy configuration. Operation S320 may correspond to operation S220, and repeated descriptions may be omitted.

When the privacy configuration is not supported, the first electronic device 10 may transmit, to the second electronic device 20, information indicating that the privacy configuration is not supported.

Based on a user input to the second electronic device 20, the second electronic device 20 may transmit, to the first electronic device 10, a message indicating whether to perform a call or reject the call.

The first electronic device 10 may receive, from the second electronic device 20, the message indicating whether to perform or reject the call with the second electronic device 20.

In operation S325, the first electronic device 10 may transmit, to the second electronic device 20, a message requesting a change of the first privacy level.

When a privacy configuration corresponding to a privacy level is not supported, the first electronic device 10 may determine that a change of the privacy level is needed.

For example, when the corresponding privacy configuration indicates deactivation of a speaker among the connected devices, and the user is in a car with other people, the first electronic device 10 may determine that the privacy configuration is not supported and that a change of the privacy level is needed.

When a change of a privacy level is needed, the first electronic device 10 may transmit a message requesting a change of the privacy level. Operation S325 may correspond to operation S530a, and repeated descriptions may be omitted.

According to an embodiment of the present disclosure, the message requesting a change of the first privacy level may include information about a second privacy level that is different from the first privacy level.

In operation S330a, the first electronic device 10 receives, from the second electronic device 20, a message approving the change of the privacy level.

The message approving the change of the privacy level may be included in a SIP message, such as a SIP UPDATE message. According to an embodiment of the present disclosure, the message approving the change of the privacy level may include at least one of information indicating whether to approve the change of the privacy level and information about a privacy level.

The information indicating whether to approve the change of the privacy level may include 1 bit of information indicating whether to approve the change of the privacy level.

The information about the privacy level may include information about the second privacy level that is different from the first privacy level. The information about the privacy level may be represented in a bitmap format.

For example, when a privacy level indicated by the information about the privacy level included in the privacy request message is {Level 3}, the information requesting the change of the privacy level may indicate a change to {Level 2} or {Level 4}.

In operation S340a, the first electronic device 10 may perform a call with the second electronic device 20 based on a privacy configuration corresponding to the second privacy level.

The performing of the call based on the privacy configuration corresponding to the second privacy level may correspond to operation S230, and repeated descriptions may be omitted.

For example, the first electronic device 10 may identify the privacy configuration corresponding to the second privacy level and configure audio or call control based on the identified privacy configuration.

The privacy configuration may include at least one of a configuration related to call acceptance, a configuration related to audio control, a configuration related to display control, a configuration related to call control, or a configuration related to call data handling, and may correspond to the privacy configuration described with reference to FIG. 1.

In operation S330b, the first electronic device 10 receives a message rejecting the change of the privacy level.

When the information indicating whether to approve the change of the privacy level indicates rejection of the change of the privacy level, the first electronic device 10 may identify whether to perform a call with the second electronic device 20 based on the privacy configuration corresponding to the first privacy level.

The first electronic device 10 may identify, based on a user input, whether to perform a call with the second electronic device 20 based on the privacy configuration corresponding to the first privacy level.

When it is identified that the first electronic device 10 is to perform a call with the second electronic device 20, the first electronic device 10 may perform the call with the second electronic device 20 based on the privacy configuration corresponding to the first privacy level. When it is identified that the first electronic device 10 is not to perform a call with the second electronic device 20, the first electronic device 10 may terminate the call.

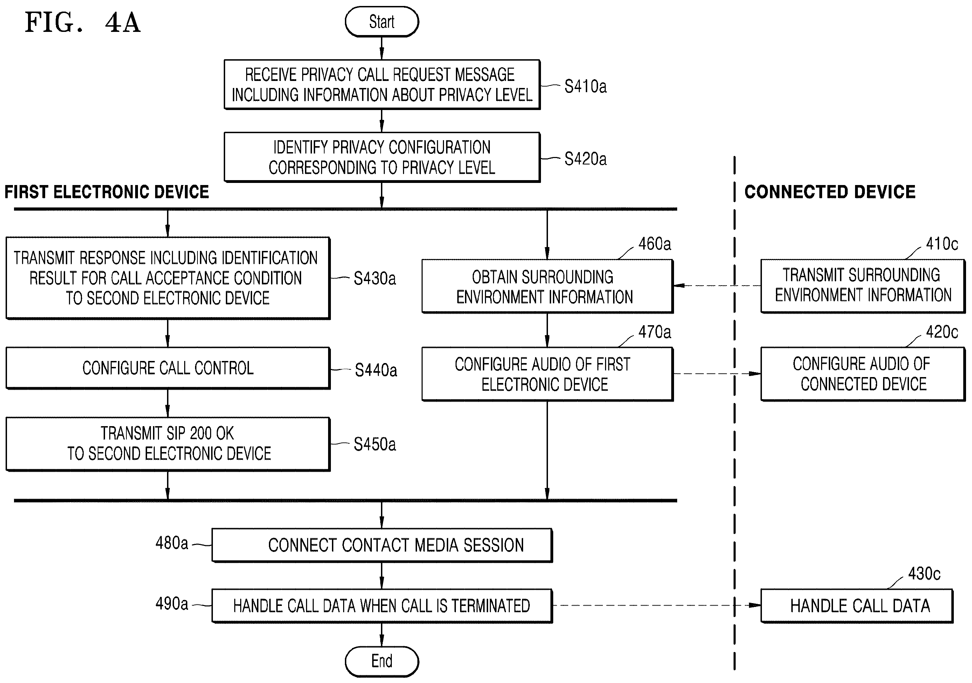

FIG. 4A illustrates a process in which a first electronic device performs a privacy call, according to an embodiment of the present disclosure.

In operation S410a, the first electronic device 10 may receive a privacy call request message including information about a privacy level.

The privacy request message may include information about a privacy level. The privacy request message may be included in a SIP message. Operation S410a may correspond to operation S210 and operation S310, and repeated descriptions may be omitted.

The privacy request message may be included in at least one of a SIP INVITE message, a SIP UPDATE message, a SIP RE-INVITE message, or an RTP data message. A SIP message to be used may be determined based on the time when privacy is configured, such as when the privacy request message is transmitted.

In operation S420a, the first electronic device 10 identifies a privacy configuration corresponding to the privacy level.

The first electronic device 10 may identify at least one privacy configuration corresponding to the privacy level. For example, when the first electronic device 10 has privacy configurations configured as {configuration 1, configuration 2, ..., configuration n}, information about the privacy level indicates {level 1}, and {configuration 1, configuration 2} corresponds to {level 1}, the first electronic device 10 may identify privacy configurations {configuration 1, configuration 2} corresponding to {level 1}.

The first electronic device 10 may identify whether the privacy configuration corresponding to the privacy level is supported. The identifying of whether the privacy configuration corresponding to the privacy level is supported may correspond to operation S220 and operation 320, and repeated descriptions may be omitted.

In operation S430a, the first electronic device 10 transmits, to the second electronic device 20, a response containing an identification result for a call acceptance condition.

The first electronic device 10 may identify, based on the privacy configuration, whether the call acceptance condition is satisfied. The privacy configuration may include a configuration related to call acceptance.

The first electronic device 10 may apply a configuration related to a call to a privacy call. The configuration related to call acceptance may be associated with at least one of verification of the ID of the first electronic device 10, verification of account information related to the first electronic device 10, and an authentication request.

The determining of the call acceptance condition may correspond to the determining of the call acceptance condition in operations S230 and S340a and the determining of the call acceptance condition as illustrated in FIGS. 6A, 6B, and 6C, and repeated descriptions may be omitted.

The first electronic device 10 may transmit, to the second electronic device 20, a response message indicating whether the call acceptance condition is satisfied. The response message may include at least one of a SIP 180 message or a SIP 183 message. Operations S715a, S720a, and S725a may correspond to operation S430a, and repeated descriptions may be omitted.

In operation S440a, the first electronic device 10 configures call control.

The privacy configuration may include a configuration related to call control. The first electronic device 10 may apply the configuration related to call control to a privacy call.

The configuration related to call control may indicate whether to disable (or deactivate)/enable (or activate) at least one of a call forwarding function, a call transferring function, a call continuity function, a video call function, a voice call function, or an RCS function.

When the configuration related to call control indicates that the call forwarding function is to be disabled (or deactivated), forwarding of a ringing call from the first electronic device 10 to another electronic device or another phone number may be disabled (or deactivated). Based on the privacy request message, the network 30 may control the call forwarding function to be disabled (or deactivated), or trigger a disable request to the first electronic device 10.

When the configuration related to call control indicates that the call transferring function is to be disabled (or deactivated), transferring of a connected call from the first electronic device 10 to another electronic device or another phone number may be disabled (or deactivated). Based on the privacy request message, the network 30 may control the call transferring function to be disabled (or deactivated), or trigger a disable request to the first electronic device 10.

When the configuration related to call control indicates that the call continuity function is to be disabled (or deactivated), the first electronic device 10 may disable (or deactivate) sharing of a connected call from the first electronic device 10 to another electronic device or another phone number.

When the configuration related to call control indicates that the video call function or function for switching to a video call is to be disabled (or deactivated), the first electronic device 10 may disable (or deactivate) the video call function.

When the configuration related to call control indicates that a function for switching to a voice call is to be enabled (or activated), the first electronic device 10 may enable (or activate) the function for switching to a voice call so that the video call is switched to the voice call.

When the configuration related to call control indicates that the RCS service function is to be disabled (or deactivated), the first electronic device 10 may disable (or deactivate) a location sharing function.

In operation S450a, the first electronic device 10 transmits a SIP 200 OK message to the second electronic device 20.

In operation S460a, the first electronic device 10 obtains surrounding environment information.

The first electronic device 10 may obtain the surrounding environment information. The surrounding environment information may include at least one of image information of the surrounding environment, sound information of the surrounding environment, information indicating whether the surrounding environment is an open space, such as a public place or a conference room, or a closed space, or information indicating whether a person other than the user (or owner) of the first electronic device 10 is present.

The first electronic device 10 may obtain the surrounding environment information by using a sensor of the first electronic device 10. Examples of the sensor may include an image sensor, a sound sensor, an acceleration sensor, a gyro sensor, a microphone sensor, a fingerprint sensor, and a vision processing unit (VPU) sensor, and are not limited to the stated examples.

For example, the first electronic device 10 may obtain an image of the surrounding environment by using an image sensor. The first electronic device 10 may identify, based on the image of the surrounding environment, whether there is a person other than the user (or owner) of the first electronic device 10, and whether the surrounding environment is an open space, such as a public place or a conference room, or a closed space.

By applying an Al model to the image of the surrounding environment, the first electronic device 10 may obtain information indicating whether there is a person other than the user (or owner) of the first electronic device 10, or information indicating whether the surrounding environment is an open space, such as a public place or a conference room, or a closed space.

For example, the first electronic device 10 may obtain ambient sound information by using a sound sensor. The first electronic device 10 may identify, based on the ambient sound information, whether there is a person other than the user (or owner) of the first electronic device 10 and whether the surrounding environment is an open space or a closed space.

By applying an Al model to the ambient sound information, the first electronic device 10 may obtain information indicating whether there is a person other than the user (or owner) of the first electronic device 10, or information indicating whether the surrounding environment is an open space or a closed space.

In operation S410c, the first electronic device 10 may receive surrounding environment information from a connected device. The connected device transmits the surrounding environment information to the first electronic device 10.

Examples of the connected device may include a UE, an MS, a vehicle, a cellular phone, a smartphone, a computer, a laptop PC, a netbook computer, a digital camera, a navigation device, a wearable device, a smart watch, wireless earbuds, a home network system (or the network 30), a security system, a medical device, or a multimedia system capable of performing a communication function.

The connected device may obtain at least one of the surrounding environment information of the first electronic device 10 or surrounding environment information of a connected audio device by using a sensor of the connected device. Obtaining the surrounding environment information may correspond to a part of the description of operation S460a.

When the connected device is wireless earbuds, the wireless earbuds may use their sensor to identify whether a person wearing the wireless earbuds is the owner or a registered user thereof, or a third party. For example, the wireless earbuds may identify whether the person wearing the wireless earbuds is the owner or registered user by comparing signals of the two wireless earbuds.

In operation S470a, the first electronic device 10 configures audio thereof.

The first electronic device 10 configures the audio based on the privacy configuration. The privacy configuration may include a configuration related to audio control. The first electronic device 10 may apply the configuration related to audio control to a privacy call.

The configuration related to audio control may include at least one of a configuration for a speaker of the first electronic device 10, a configuration for a device connected by wire to the first electronic device 10, a configuration for a device connected wirelessly thereto, and other audio configurations.

When the configuration for the speaker of the first electronic device 10 indicates deactivation of the speaker, the first electronic device 10 may deactivate the speaker of the first electronic device 10.

When the configuration for the speaker of the first electronic device 10 indicate that the volume is to be lowered, the first electronic device 10 may lower the speaker volume.

When the connected device is a wirelessly connected audio device, such as wireless earbuds, the first electronic device 10 may disable (or deactivate) audio of other people or provide warning information to the user of the first electronic device 10.

The first electronic device 10 may disconnect at least one of the connected devices. For example, when a device is connected via BT, the device may be disconnected from the BT connection.

The first electronic device 10 configures a display of the first electronic device 10.

The first electronic device 10 configures the display based on the privacy configuration. The privacy configuration may include a configuration related to display control. The configuration related to display control may include at least one of a configuration for the display of the first electronic device 10, a configuration for a device connected by wire to the first electronic device 10, a configuration for a device connected wirelessly thereto, and other display configurations.

When the configuration for the display of the first electronic device 10 indicates deactivation of the display, the first electronic device 10 may deactivate the display. When the configuration for the display of the first electronic device 10 indicate that the brightness or resolution is to be lowered, the first electronic device 10 may lower the brightness or resolution of the display.

In operation S420c, the connected device configures audio thereof.

The first electronic device 10 transmits, to the connected device, configuration information for controlling the audio of the connected device.

For example, when audio is configured to be disabled (or deactivated) for devices a and b among one or more connected devices a, b, and c, the audio on the devices a and b may be controlled to be disabled (or deactivated) by transmitting the configuration information to at least one of the connected devices a, b, or c.

The first electronic device 10 transmits, to the connected device, configuration information for configuring a display of the connected device. For example, when a display is configured to be deactivated for devices a and b among one or more devices a, b, and c connected by wire, displays of the devices a and b may be controlled to be deactivated by transmitting the configuration information to at least one of the devices a, b, or c.

In operation S480a, the first electronic device 10 connects (or establishes) a call media session with the second electronic device 20.

In operation S490a, the first electronic device 10 handles call data.

The second electronic device 20 may identify whether the call is terminated. When the call is terminated, the second electronic device 20 may handle call data based on the privacy configuration. The privacy configuration may include a configuration related to call data handling. The configuration related to call data handling includes at least one of a configuration for call recording processing and a configuration for call log history processing.

The first electronic device 10 may apply the configuration related to call data handling to a privacy call. The first electronic device 10 may erase call data, encrypt call data, or move call data to a secure region.

For example, the first electronic device 10 may disable (or deactivate) a function related to call recording, delete call recordings, encrypt call recordings, or move call recordings to a secure region.

The handling of call data by the first electronic device 10 may correspond to that the contents FIGS. 9A and 9B, and repeated descriptions may be omitted.

In operation S430c, the connected device handles call data.

The handling of call data by the connected device may correspond to operation S490a and the description of FIGS. 9A and 9B, and repeated descriptions may be omitted.

Although FIG. 4A illustrates that operation S420a and operation S430a are performed first, followed by operation S440a, in an embodiment, operations S420a, S430a, and S440a may be performed simultaneously, or operation S440a may be performed first, followed by at least one of operations S420a and S430a.

In an embodiment, at least one of operations S410a to S490a and operations S410c to S430c may be omitted or performed by another device such as a separate server or system.

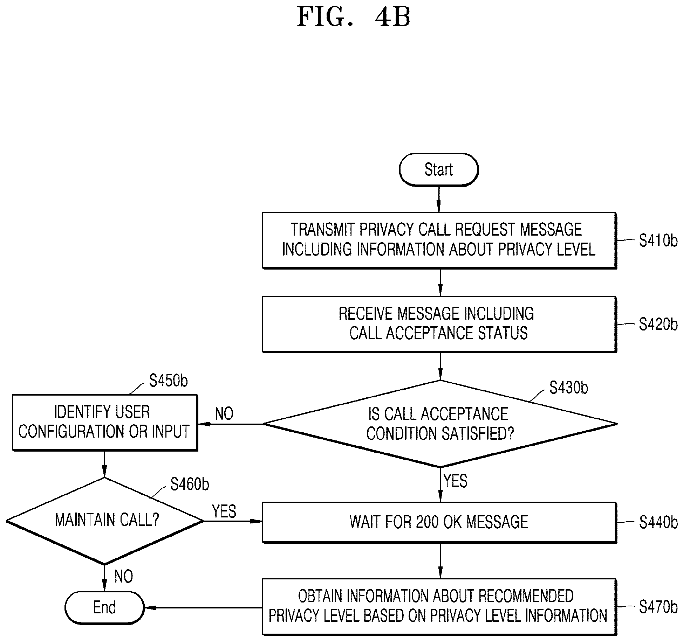

FIG. 4B illustrates a process in which a second electronic device performs a privacy call, according to an embodiment of the present disclosure.

In operation S410b, the second electronic device 20 may transmit a privacy call request message including information about a privacy level.

The privacy request message may include information about a privacy level. The privacy request message may be included in a SIP message. Operation S410b may correspond to operations S210, S310, and S410a, and repeated descriptions may be omitted.

In operation S420b, the second electronic device 20 receives a message including a call acceptance status.

The message including the call acceptance status may include the response message from the first electronic device 10, indicating whether a call acceptance condition is satisfied. The second electronic device 20 may receive, from the first electronic device 10, the response message indicating whether the call acceptance condition is satisfied. The response message may include at least one of a SIP 180 message or a SIP 183 message.

In operation S430b, the second electronic device 20 determines whether the call acceptance condition is satisfied.

Based on the message including the call acceptance status, the second electronic device 20 may identify whether the call acceptance condition is satisfied.

In operation S440b, the second electronic device 20 waits for a 200 OK message.

When the call acceptance condition is satisfied, the second electronic device 20 may wait for a 200 OK message from the first electronic device 10.

When it is identified that the user is to maintain the call, the second electronic device 20 may wait for a 200 OK message from the first electronic device 10.

In operation S450b, the second electronic device 20 identifies a user configuration or input.

When the call acceptance condition is not satisfied, the second electronic device 20 may display information indicating the call acceptance condition is not satisfied to the user. The second electronic device 20 may identify whether there is a user input.

In operation S460b, the second electronic device 20 identifies whether the user is to maintain the call.

The second electronic device 20 may identify whether the user is to maintain the call based on a user input. When it is identified that the user is not to maintain the call, the second electronic device 20 may terminate the call.

In operation S470b, the second electronic device 20 obtains information about a recommended privacy level based on privacy level information.

The privacy level information may include at least one of information about a call cancellation history corresponding to at least one privacy level, or information about a call completion history corresponding to the at least one privacy level. The obtaining, by the second electronic device 20, of the information about the recommended privacy level may correspond to the description of FIG. 9B, and repeated descriptions may be omitted.

In operation S480a, the first electronic device 10 connects (or establishes) a call media session with the second electronic device 20.

In operation S490a, the first electronic device 10 handles call data.

The second electronic device 20 may identify whether the call is terminated. When the call is terminated, the second electronic device 20 may handle call data based on a privacy configuration.

A configuration related to call data handling includes at least one of a configuration for call recording processing and a configuration for call log history processing.

The configuration related to call data handling may indicate that call data is to be erased, that call data is to be encrypted, or that call data is to be moved to a secure region. The handling of call data by the second electronic device 20 may correspond to the contents of FIGS. 9A and 9B, and repeated descriptions may be omitted.

In operation S430c, a connected device handles call data.

A configuration related to call data handling includes at least one of a configuration for call recording processing and a configuration for call log history processing.

The configuration related to call data handling may indicate that call data is to be erased, that call data is to be encrypted, or that call data is to be moved to a secure region.

The handling of call data by the connected device may correspond to the contents of FIGS. 9A and 9B, and repeated descriptions may be omitted.

In an embodiment, at least one of operations S410b to S470b and operations S510b and S520b may be performed simultaneously or in a different order than illustrated. In an embodiment, at least one of operations S410b to S470b and operations S510b and S520b may be omitted or performed by another device such as a separate server or system.

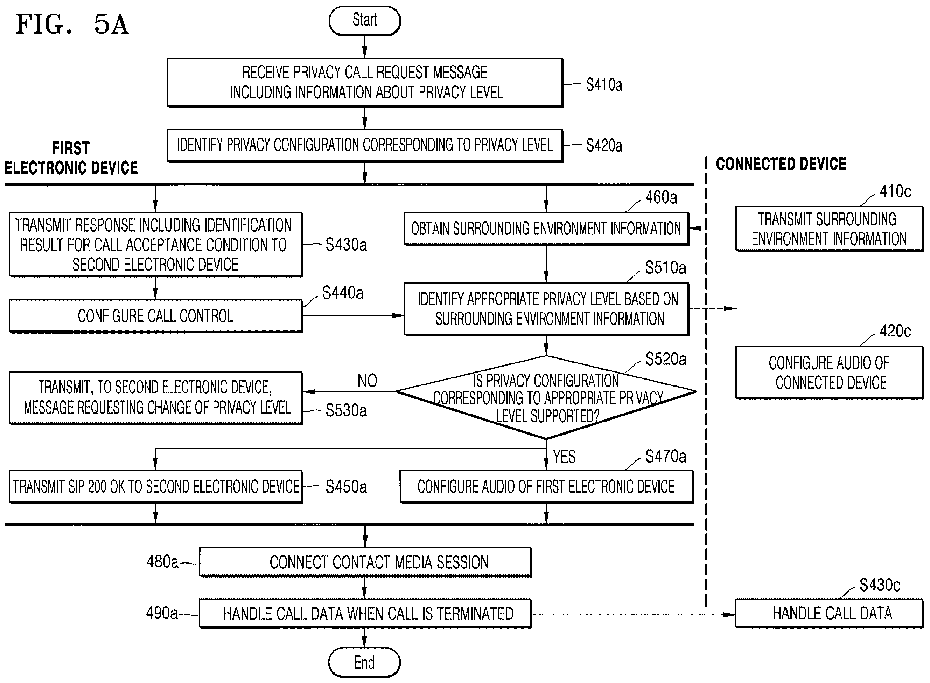

FIG. 5A illustrates a process in which a first electronic device performs a privacy call, according to an embodiment of the present disclosure.

In operation S410a, the first electronic device 10 may receive a privacy call request message including information about a privacy level.

In operation S420a, the first electronic device 10 identifies a privacy configuration corresponding to the privacy level.

In operation S430a, the first electronic device 10 transmits, to the second electronic device 20, a response containing an identification result for a call acceptance condition.

In operation S440a, the first electronic device 10 configures call control.

In operation S450a, the first electronic device 10 transmits a SIP 200 OK message to the second electronic device 20.

In operation S460a, the first electronic device 10 obtains surrounding environment information.

In operation S410c, a connected device transmits the surrounding environment information to the first electronic device 10. The first electronic device 10 may receive the surrounding environment information from the connected device.

In operation S510a, the first electronic device 10 identifies an appropriate privacy level based on the surrounding environment information.

The first electronic device 10 identifies an appropriate privacy level based on the surrounding environment information. The appropriate privacy level may indicate the degree of protection required for privacy protection in the surrounding environment. For example, when the surrounding environment information indicates that there is another person, the first electronic device 10 may determine the appropriate privacy level as {Level 5}. When the surrounding environment information indicates that there is no one else in a closed space, the first electronic device 10 may determine the appropriate privacy level as {Level 1}.

In operation S520a, the first electronic device 10 identifies whether a privacy configuration corresponding to the appropriate privacy level is supported.

The first electronic device 10 may identify whether a privacy configuration corresponding to the appropriate privacy level is supported, which may correspond to operation S220.

For example, when the corresponding privacy configuration indicates that shared audio is disabled (or deactivated) and another person is in the vehicle being driven, the first electronic device may determine that the corresponding privacy configuration is not supported.

When at least one other person is present within a predetermined distance and only a loud speaker is available, the first electronic device may determine that the corresponding privacy configuration is not supported.

When the privacy configuration corresponding to the appropriate privacy level is supported, audio may be configured based on the privacy configuration corresponding to the appropriate privacy level. When the privacy configuration corresponding to the appropriate privacy level is not supported, the first electronic device 10 may determine that a request for a change of the privacy level is needed.

The first electronic device 10 may identify whether a change of the privacy level is needed based on at least one of the received information about the privacy level, appropriate privacy level, or information about the connected device.

When the appropriate privacy level is different from the received privacy level, the first electronic device 10 may determine that a change of the privacy level is needed. When the appropriate privacy level is equal to the received privacy level, the first electronic device 10 may determine that a change of the privacy level is not needed.

For example, based on the received privacy level {Level 3} and the appropriate privacy level {Level 5}, the first electronic device 10 may determine that a change of the privacy level to {Level 5} is needed.

Based on the received privacy level {Level 3} and the appropriate privacy level {Level 1}, the first electronic device 10 may determine that a change of the privacy level to {Level 1} is needed.

When the privacy configuration corresponding to the appropriate privacy level is not supported, the first electronic device 10 may reject the privacy call request.

When the privacy configuration corresponding to the appropriate privacy level is not supported, the first electronic device 10 may transmit, to the second electronic device 20, at least one of information explaining that the privacy configuration is not supported, information requesting a callback, and information requesting a change in a contact method to a message or the like.

In operation S530a, when a change of the privacy level is required, the first electronic device 10 may transmit, to the second electronic device 20, a message requesting the change of the privacy level.

The message requesting the change of the privacy level may include information about a privacy level that is different from the privacy level indicated by the information about the privacy level included in the privacy request message.

According to an embodiment of the present disclosure, the first electronic device 10 may receive, from the second electronic device 20, a response message approving a privacy change, such as a SIP UPDATE or SIP RE-INVITE message. The response message may include information indicating approval of the change of the privacy level.

In an embodiment, the information indicating approval of the change of the privacy level may include 1 bit of information indicating whether to approve the change of the privacy level.

In an embodiment, the information indicating approval of the change of the privacy level may include information indicating a privacy level that is equal to or different from the privacy level indicated by the information about the privacy level.

The first electronic device 10 may perform at least one of the above-described operations based on a changed privacy level. For example, the first electronic device 10 may identify a privacy configuration corresponding to the changed privacy level and perform a call with the second electronic device 20 based on the identified privacy configuration.

When the information indicating whether to approve the change of the privacy level indicates rejection of the change of the privacy level, the first electronic device 10 may identify whether to perform a call with the second electronic device 20 based on a privacy configuration corresponding to a first privacy level.

The first electronic device 10 may identify, based on a user input, whether to perform a call with the second electronic device 20 based on the privacy configuration corresponding to the first privacy level.

When it is identified that the first electronic device 10 is to perform a call with the second electronic device 20, the first electronic device 10 may perform the call with the second electronic device 20 based on the privacy configuration corresponding to the first privacy level. When it is identified that the first electronic device 10 will not perform a call with the second electronic device 20, the first electronic device 10 may terminate the call.

In operation S470a, the first electronic device 10 configures audio thereof.

In operation S420c, the connected device configures audio thereof.

In operation S450a, the first electronic device 10 transmits a SIP 200 OK message to the second electronic device 20.

In operation S480a, the first electronic device 10 connects (or establishes) a call media session with the second electronic device 20.

In operation S490a, the first electronic device 10 handles call data.

In operation S430c, the connected device handles call data.

In an embodiment, at least one of operations S410a to S490a and operations S410c to S430c may be performed simultaneously or in a different order than illustrated.

Although FIG.5A illustrates that operation S420a and operation S430a are performed first, followed by operation S440a, in an embodiment, operations S420a, S430a, and S440a may be performed simultaneously, or operation S440 may be performed first, followed by at least one of operations S420 and S430.

In an embodiment, at least one of operations S410a to S490a, operations S410c to S430c, and operations S510a to S530a may be omitted or performed by another device such as a separate server or system.

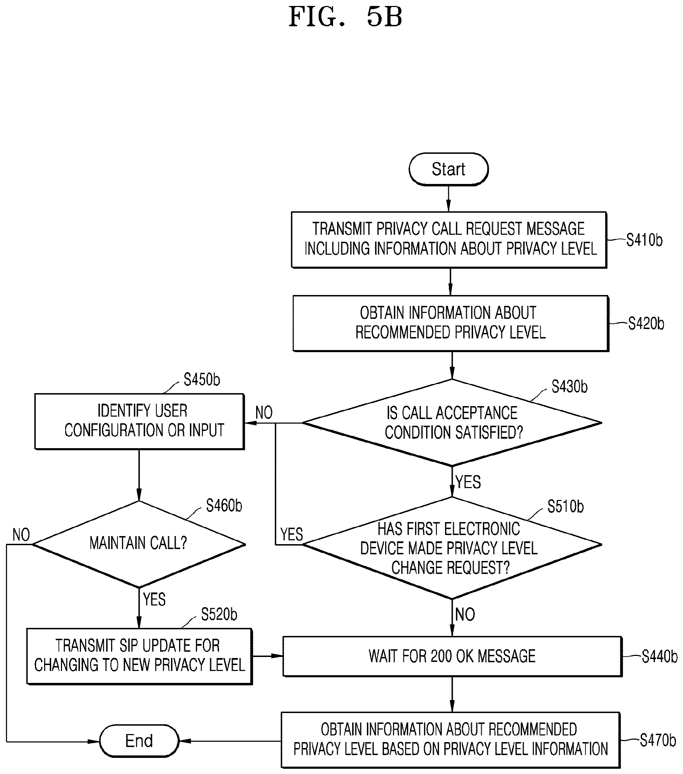

FIG. 5B illustrates a process in which a second electronic device performs a privacy call, according to an embodiment of the present disclosure.

In operation S410b, the second electronic device 20 may transmit a privacy call request message including information about a privacy level.

In operation S420b, the second electronic device 20 receives a message including a call acceptance status.

In operation S430b, the second electronic device 20 determines whether the call acceptance condition is satisfied.

In operation S440b, the second electronic device 20 waits for a 200 OK message.

In operation S450b, the second electronic device 20 identifies a user configuration or input.

In operation S510b, the second electronic device 20 may identify whether the first electronic device 10 has made a privacy change request.

The second electronic device 20 may identify whether a message requesting a privacy change is received from the first electronic device 10.

When a message requesting a change of the privacy level is received from the first electronic device 10, the second electronic device 20 may display to the user information about the request for the change of the privacy level.

The second electronic device 20 may identify whether there is a user input regarding whether to maintain the call. When the change of the privacy level is approved, it may be determined that the call will be maintained.

In operation S460b, the second electronic device 20 identifies whether the user is to maintain the call.

In operation S520b, the second electronic device 20 transmits a message approving the change of the privacy level to the first electronic device.

When it is identified that the user is to maintain the call, the second electronic device 20 may transmit a message approving the change of the privacy level to the first electronic device 10. The message approving the change of the privacy level may be included in a SIP UPDATE message.

The message approving the change of the privacy level may include 1 bit of information indicating whether to approve the change of the privacy level.

The message approving the change of the privacy level may include information indicating a privacy level that is equal to or different from the privacy level indicated by the information about the privacy level.

In operation S470b, the second electronic device 20 obtains information about a recommended privacy level based on privacy level information.

The privacy level information may include at least one of information about a call cancellation history corresponding to at least one privacy level, or information about a call completion history corresponding to the at least one privacy level. The obtaining, by the second electronic device 20, of the information about the recommended privacy level may correspond to the description of FIG. 9B, and repeated descriptions may be omitted.

In an embodiment, at least one of operations S410b to S470b and operations S510b and S520b may be performed simultaneously or in a different order than illustrated. In an embodiment, at least one of operations S410b to S470b and operations S510b and S520b may be omitted or performed by another device such as a separate server or system.

FIGS. 6A, 6B, and 6C are diagrams illustrating methods of determining a call acceptance condition, according to an embodiment of the present disclosure.

The first electronic device 10 may determine a call acceptance condition based on a privacy configuration. The privacy configuration may include a configuration related to call acceptance. The configuration related to call acceptance may be associated with at least one of verification of an ID of the first electronic device 10, verification of account information related to the first electronic device 10, and an authentication result.

Based on at least one of the verification of the ID, verification of the account information related to the first electronic device 10, and the authentication request, the first electronic device 10 may determine whether the call acceptance condition is satisfied.

A privacy request message may include a verification request message for the ID or account information of the first electronic device 10 and an authentication request message. The privacy request message may be transmitted from the second electronic device 20 to the first electronic device 10 via the network 30, such as a service provider. The service provider may include an account server that manages the ID or account information of the first electronic device 10.

Referring to FIG. 6A, the second electronic device 20 may transmit a privacy request message containing privacy level information to the service provider. The service provider may receive the privacy request message containing the privacy level information. The service provider may verify the ID or account information of the first electronic device 10.

Referring to FIG. 6B, the second electronic device 20 may transmit an ID indicator of the first electronic device 10 to the service provider. The ID indicator may be included in the privacy request message. The service provider may receive, from the second electronic device 20, the ID indicator of the first electronic device 10.

The service provider may verify whether the ID of the first electronic device 10 corresponds to at least one ID indicator.

The service provider may transmit, to the first electronic device 10, the privacy request message including the ID indicator of the first electronic device 10. The first electronic device 10 may receive the ID indicator.

The first electronic device 10 may determine whether the call acceptance condition is satisfied by verifying whether the ID of the first electronic device 10 corresponds to the ID indicator.

Referring to FIG. 6C, the second electronic device 20 may transmit a privacy request message containing privacy level information to the first electronic device 10. The service provider may receive the privacy request message containing the privacy level information. The service provider may block a call direction from being changed to a device other than the first electronic device 10.

The service provider may transmit the privacy request message to the first electronic device 10. The first electronic device 10 may receive the privacy request message from the service provider.

The first electronic device 10 may request authentication from the user of the first electronic device 10. The first electronic device 10 may obtain an input required for authentication from the user. The first electronic device 10 may determine, based on the user's input, whether the call acceptance condition is satisfied.

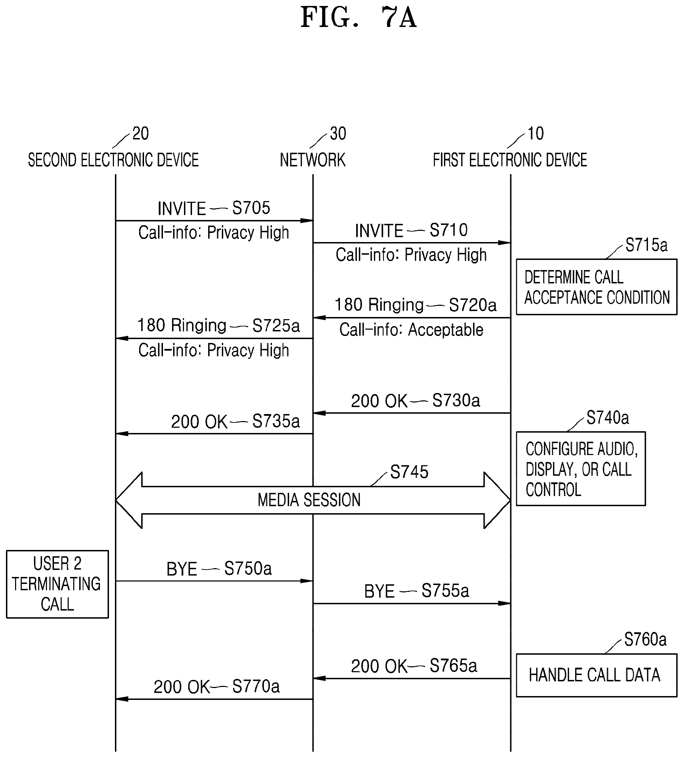

FIG. 7A is a flowchart of a method of requesting a privacy call before a call, according to an embodiment of the present disclosure.

In operation S705, the second electronic device 20 may transmit a SIP INVITE message to the network 30.

Before a call, the second electronic device 20 may transmit a privacy request message to the first electronic device 10 by using the SIP INVITE message.

The Call-Info in the SIP INVITE message may indicate a privacy level. For example, the Call-Info may indicate privacy high. The network 30 may receive the SIP INVITE message from the second electronic device 20.

In operation S710, the network 30 may transmit the SIP INVITE message to the first electronic device 10.

Operations S705 and S710 may correspond to operation S410b, and repeated descriptions may be omitted.

In operation S715a, the first electronic device 10 may determine whether a call acceptance condition is satisfied.

In operation S720a, the first electronic device 10 may transmit a 180 ringing message to the network 30.

The first electronic device 10 may transmit a response message containing information about whether the call acceptance condition is satisfied. The response message may be transmitted using at least one of the 180 ringing message and a 183 ringing message.

The response message may include information about a call acceptance status. For example, when the call acceptance condition is satisfied, Call-Info in the 180 ringing message may indicate Acceptable.

In operation S725a, the network 30 may transmit the 180 ringing message to the second electronic device 20.

Operations S715a, S720a, and S725a may correspond to operation S430a, and repeated descriptions may be omitted.

In operation S730a, when a first user of the first electronic device 10 accepts the call, the first electronic device 10 may transmit a 200 OK message to the network 30.

In operation S735a, when the first user of the first electronic device 10 accepts the call, the network 30 may transmit the 200 OK message to the second electronic device 20.

In operation S740a, the first electronic device 10 may configure at least one of audio and call control.

The privacy configuration may include a configuration related to call control. The configuration related to call control may indicate whether to disable (or deactivate)/enable (or activate) at least one of a call forwarding function, a call transferring function, a call continuity function, a video call function, a voice call function, or an RCS function. The configuring of call control may correspond to operations 230 and S440a, and repeated descriptions may be omitted.

In operation S745a, a media session between the first electronic device 10 and the second electronic device 20 may be conducted.

In operation S750a, when it is identified that a user of the second electronic device 20 has terminated the call, the second electronic device 20 may transmit a BYE message to the network 30.

In operation S755a, the network 30 may transmit the BYE message to the first electronic device 10.

In operation S760a, the first electronic device 10 handles call data.

A configuration related to call data handling includes at least one of a configuration for call recording processing and a configuration for call log history processing.

The configuration related to call data handling may indicate that call data is to be erased, that call data is to be encrypted, or that call data is to be moved to a secure region.

The handling of call data by the first electronic device 10, the second electronic device 20, and the network 30 may correspond to the contents of FIGS. 9A and 9B, and repeated descriptions may be omitted.

In operation S765a, the first electronic device 10 may transmit a 200 OK message to the network 30.

In operation S770a, the network 30 may transmit the 200 OK message to the second electronic device 20.

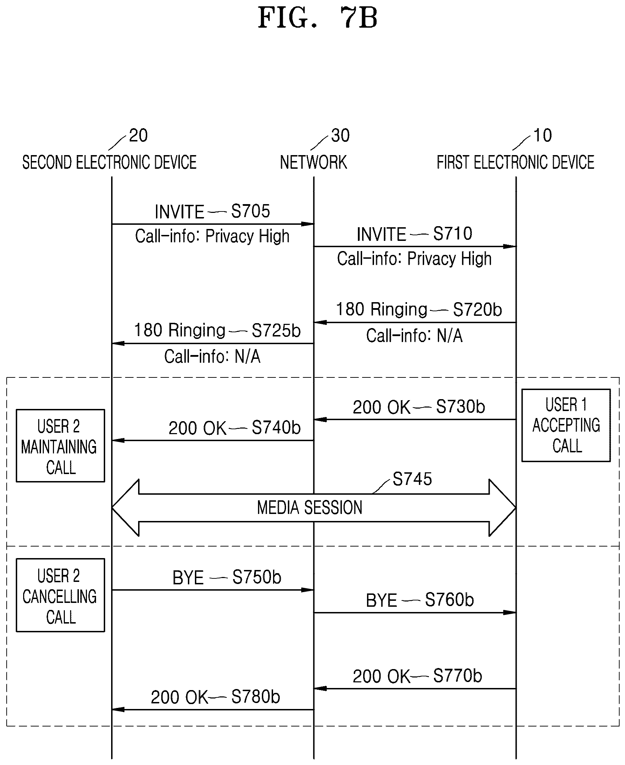

FIG. 7B is a flowchart of a method of requesting a privacy call before a call, according to an embodiment of the present disclosure.

In operation S705, the second electronic device 20 transmits a SIP INVITE message to the network 30.

Before a call, the second electronic device 20 may transmit a privacy request message to the first electronic device 10 by using the SIP INVITE message.

The Call-Info in the SIP INVITE message may indicate a privacy level. For example, the Call-Info may indicate privacy high. The network 30 may receive the SIP INVITE message from the second electronic device 20.

In operation S710, the network 30 may transmit the SIP INVITE message to the first electronic device 10.

Operations S705 and S710 may correspond to operation S410b, and repeated descriptions may be omitted.

In operation S720b, the first electronic device 10 may transmit a 180 ringing message to the network 30.

The first electronic device 10 may transmit a response message containing information about whether the call acceptance condition is satisfied. The response message may be transmitted using at least one of the 180 ringing message and a 183 ringing message.

The response message may include information about a call acceptance status. For example, when the call acceptance condition is satisfied, the Call-Info in the 180 ringing message may indicate Acceptable.

When the call acceptance condition is not satisfied, the first electronic device 10 may indicate Not Applicable (N/A) in the Call-Info of the 180 ringing message. For example, when the configuration related to call acceptance corresponding to privacy high is not supported, the first electronic device 10 may indicate N/A in the Call-Info of the 180 ringing message.

In operation S725b, the network 30 may transmit the 180 ringing message to the first electronic device 20.

In operation S730b, when the first user of the first electronic device 10 accepts the call, the first electronic device 10 may transmit a 200 OK message to the network 30.

In operation S740b, the network 30 may transmit the 200 OK message to the second electronic device 20.

When the second electronic device 20 obtains an input indicating that a second user of the second electronic device 20 is to maintain the call, a media session between the first electronic device 10 and the second electronic device 20 may proceed.

In operation S750b , when the second electronic device 20 obtains an input indicating that the second user of the second electronic device 20 is to cancel the call, the second electronic device 20 may transmit a BYE message to the network 30.

In operation S760b, the network 30 may transmit the BYE message to the first electronic device 10.

In operation S770b, the first electronic device 10 may transmit a 200 OK message to the network 30.

In operation S780b, the network 30 may transmit the 200 OK message to the second electronic device 20.

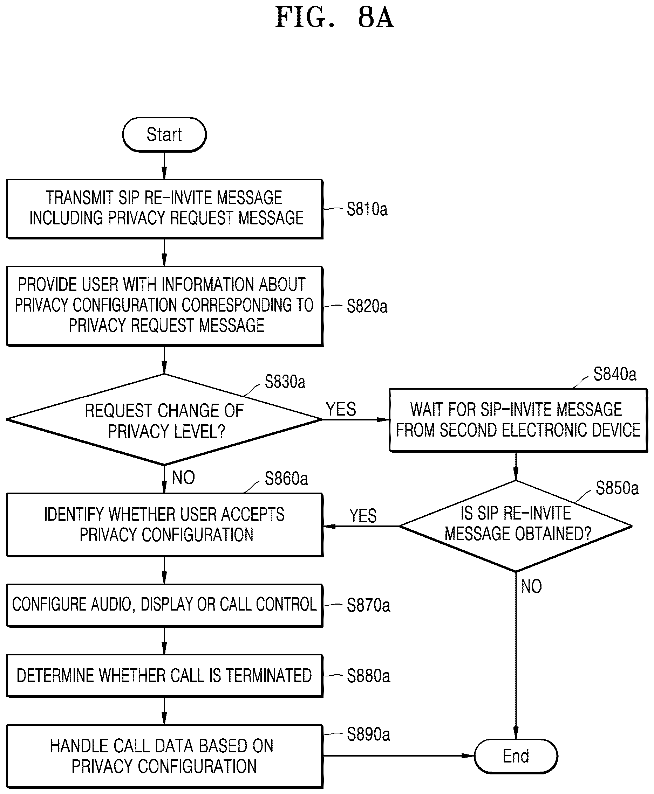

FIG. 8A is a diagram illustrating a case in which a first electronic device receives a request for a privacy call during a call, according to an embodiment of the present disclosure.

In operation S810, the first electronic device 10 may receive, from the second electronic device 20, a SIP-RE INVITE message including a privacy request message.

During a call, the second electronic device 20 may transmit a privacy call request message to the first electronic device 10 via the SIP RE-INVITE message. The first electronic device 10 may receive the privacy call request message from the second electronic device 20.

In operation S820a, the first electronic device 10 may provide or display information about a privacy configuration corresponding to a privacy request to the first user of the first electronic device 10.

The first electronic device 10 may identify the privacy configuration corresponding to the privacy level. The first electronic device 10 may display or provide, to the user, information about the privacy configuration corresponding to the privacy request.

For example, the first electronic device 10 may display, to the user, information about a list of privacy configurations corresponding to the privacy request.

In operation S830a, the first electronic device 10 may determine whether to request a change of the privacy level.

The first electronic device 10 may determine whether a change of the privacy level is needed. When the privacy configuration corresponding to the privacy request is not supported or when the user requests a change of the privacy level, the first electronic device 10 may determine that the change of the privacy level is needed.

When a request for a change of the privacy level is needed, the first electronic device 10 may transmit, to the second electronic device 20, a message requesting the change of the privacy level.

Operation S830a may correspond to operation S530a, and repeated descriptions may be omitted.

In operation S840a, the first electronic device 10 may wait for a SIP RE-INVITE message from the second electronic device 20.

A message approving the change of the privacy level may be included in a SIP message, such as a SIP RE-INVITE message. The message approving the change of the privacy level may include at least one of information indicating whether to approve the change of the privacy level and information about a privacy level.

The information indicating whether to approve the change of the privacy level may include 1 bit of information indicating whether to approve the change of the privacy level.

The information about the privacy level may include information about a second privacy level that is different from a first privacy level. For example, when a privacy level indicated by the information about the privacy level included in the privacy request message is {Level 3}, the information requesting the change of the privacy level may indicate a change to {Level 2} or {Level 4}.

In operation S850a, the first electronic device 10 may determine whether the SIP RE-INVITE message is obtained.

When the first electronic device 10 fails to obtain the SIP RE-INVITE message, the first electronic device 10 may terminate the call-related procedure.

In operation S860a, the first electronic device 10 may identify whether the user accepts the privacy configuration.

When the first electronic device 10 obtains the SIP RE-INVITE message, the first electronic device 10 may identify whether the user of the second electronic device 20 approves the change of the privacy level based on the SIP RE-INVITE message.

When the user of the second electronic device 20 approves the change of the privacy level, the first electronic device 10 may identify a privacy configuration corresponding to a changed privacy level.

The first electronic device 10 may identify whether the user accept the privacy configuration. When the user of the first electronic device 10 does not accept the privacy configuration, the call procedure may be terminated or a change of the privacy level may be requested.

In operation S870a, the first electronic device 10 may configure at least one of audio, display, or call control based on the privacy configuration.

Operation S870a may correspond to operation S230, and repeated descriptions may be omitted.

In operation S880a, the first electronic device 10 may determine whether the call is terminated.

In operation S890a, the first electronic device 10 may configure call data handling based on the privacy configuration.

When the call is terminated, the first electronic device 10 may erase call data, encrypt call data, or move call data to a secure region based on the privacy configuration.

The handling of call data by the first electronic device 10, the second electronic device 20, and the network 30 may correspond to the contents of FIGS. 9A and 9B, and repeated descriptions may be omitted.

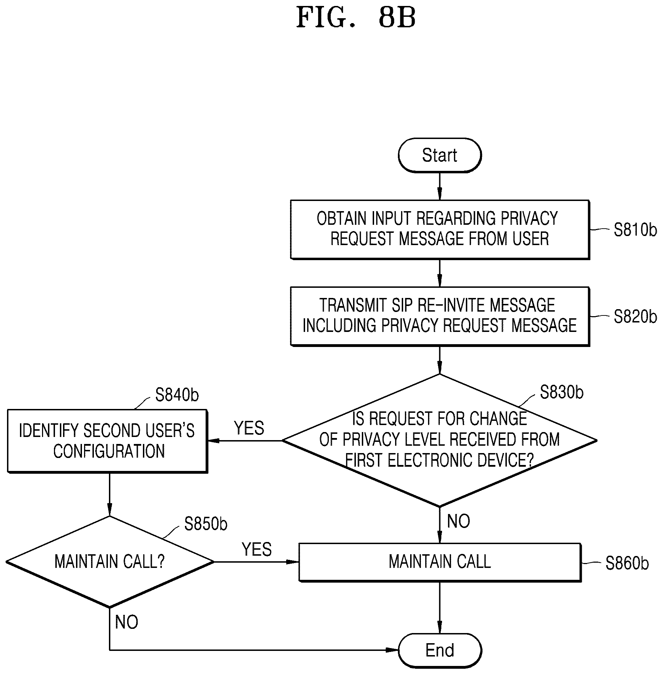

FIG. 8B is a diagram illustrating a case in which a second electronic device requests a privacy call during a call, according to an embodiment of the present disclosure.

In operation S810b, the second electronic device 20 may obtain an input regarding the user's privacy request.

During a call, the second electronic device 20 may identify whether the user requests a privacy call based on a user input to the second electronic device 20.

In operation S820b, the second electronic device 20 may transmit a SIP RE-INVITE message including a privacy request message to the first electronic device 10.

During the call, the second electronic device 20 may transmit a privacy request message to the first electronic device 10 by using the SIP RE-INVITE message. The Call-Info in the SIP RE-INVITE message may indicate a privacy level.

In operation S830b, the second electronic device 20 may determine whether a message requesting a change of the privacy level is received from the first electronic device 10.

When the message requesting the change of the privacy level is received, the second electronic device 20 may identify whether to approve the change of the privacy level.

The second electronic device 20 may identify whether a message requesting a privacy change is received from the first electronic device 10. When the message requesting the change of the privacy level is received from the first electronic device 10, the second electronic device 20 may display to the user information about the request for the change of the privacy level.

In operation S840b, the second electronic device 20 may identify the user's configuration or input.

The second electronic device 20 may identify whether there is a user configuration regarding whether to approve the request for the change of the privacy level The second electronic device 20 may identify whether there is a user input regarding whether to maintain the call.

In operation S850b, the second electronic device 20 may determine whether the second user is to maintain the call.

When it is identified that the second user is to maintain the call, the second electronic device 20 may transmit a message approving the change of the privacy level to the first electronic device 10. The message approving the change of the privacy level may be included in a SIP RE-INVITE message.

The message approving the change of the privacy level may include 1 bit of information indicating whether to approve the change of the privacy level.

The message approving the change of the privacy level may include information indicating a privacy level that is equal to or different from the privacy level indicated by the information about the privacy level.

In operation S860b, the second electronic device 20 may perform the call.

When the privacy change request is not received, the second electronic device 20 may perform the call based on a privacy configuration corresponding to the privacy request message.

When the privacy change request is received and the user approves the change of the privacy level, the second electronic device 20 may perform the call based on a changed privacy level.

FIG. 9A illustrates a first electronic device 10 handling call data, according to an embodiment of the present disclosure.

In operation S910a, the first electronic device 10 determines whether a call is terminated.

The first electronic device 10 may identify at least one of whether the users of the second electronic device 20 and the first electronic device 10 have canceled or rejected the call, whether the users of the second electronic device 20 and the first electronic device 10 have accepted the call, whether a media session has taken place, or whether the media session has been terminated.

In operation S920a, the first electronic device 10 identifies a privacy level corresponding to a privacy call.

When the call with the second electronic device 20 is terminated, the first electronic device 10 may determine a privacy level corresponding to the terminated call with the second electronic device 20.

For example, when a media session proceeds and is then terminated based on a privacy configuration corresponding to a first privacy level, a privacy level corresponding to the terminated call may be the first privacy level.

When the second electronic device requests the first privacy level and the call is terminated due to rejection or cancellation without changing the privacy level, a privacy level corresponding to the terminated call may be the first privacy level.

In operation S930a, the first electronic device 10 determines whether a call log should be erased based on a privacy request.

The first electronic device 10 may determine whether removal of the call log is needed based on a privacy configuration corresponding to the privacy request.

For example, when the privacy configuration corresponding to the privacy request indicates a privacy protection level greater than or equal to a threshold level, the first electronic device 10 may determine that removal of the call log is needed.

The first electronic device 10 may remove the call log, encrypt the call log, or move the call log to a secure region.

In operation S940a, the first electronic device 10 obtains call log information mapped to the privacy level.

The call log information may include a field for privacy level related information. For example, information about a call log may include information in which a call log corresponds to a privacy level, such as {call log 1 with the second electronic device 20, level 3} or {call log 3 with a third electronic device, level 4}.

When the call log information is not removed after the call is terminated, the first electronic device 10 may obtain information about the call log based on the privacy level corresponding to the privacy call with the second electronic device 20.

For example, when a privacy level in the existing call information mapped to the privacy call with the second electronic device 20 is {level 3}, the first electronic device 10 may update the call log information to {call log with the second electronic device 20, level 3}.

In operation S950a, the first electronic device 10 obtains information about a contact mapped to the privacy level.

The information about the contact may include a field for privacy level-related information. The information about the contact may further include information about a phone book, an address list, a friends list, or a cloud account. For example, information about a contact may be information in which a contact corresponds to a privacy level, such as {phone number of the second electronic device 20, level 3} and {phone number of the third electronic device, level 4}.

The first electronic device 10 may obtain the information about the contact based on the privacy level corresponding to the terminated privacy call. For example, when information about the existing contact is {phone number of the second electronic device 20, level 2} and the privacy level corresponding to the privacy call with the second electronic device 20 is {level 3}, the first electronic device (10) may update the information about the contact to {phone number of the second electronic device 20, level 3}.

For example, when there is no privacy level information corresponding to a contact of the second electronic device 20 and the privacy level corresponding to the privacy call with the second electronic device 20 is {level 3}, the first electronic device 10 may generate information about the contact as {phone number of the second electronic device 20, level 3}.

The first electronic device 10 may obtain information about a recommended privacy level based on the information about the contact or the call log information. For example, the first electronic device 10 may identify a privacy level corresponding to a call log indicating that the media session has taken place, and determine the identified privacy level as the recommended privacy level.

The information about the recommended privacy level may be used for a privacy configuration for a next call. For example, when the user of the first electronic device 10 performs a call with the second electronic device 20, the first electronic device 10 may provide the user with a privacy configuration corresponding to the recommended privacy level.

In an embodiment, the second electronic device 20 may handle call data after the privacy call is terminated. The handling of the call data by the second electronic device 20 may correspond to at least one of operations 910a to 950a in FIG. 9A.

FIG. 9B illustrates a first electronic device handling call data, according to an embodiment of the present disclosure.

In operation S910b, the first electronic device 10 may identify at least one of the number of call rejections or the number of call completions, corresponding to at least one privacy level.

The number of call rejections may include the number of times the other party requesting a call to the first electronic device 10 rejected or canceled the call. The number of call completions may include the number of times media sessions ended or the number of times the user accepted calls.

The first electronic device 10 may determine whether the privacy call has been terminated. When the call has been terminated, the first electronic device 10 may update the number of call rejections or call completion for each privacy level.

For example, when the privacy levels are {level 1, level 2, ..., level 5} and the terminated privacy call with the second electronic device 20 corresponds to {level 2}, the first electronic device 10 may update the number of call rejections or call completions to those corresponding to {level 2}.

In operation S920b, the first electronic device 10 obtains information about a recommended privacy level based on at least one of the number of call rejections and the number of call completions.

The first electronic device 10 may determine the recommended privacy level for a call with the second electronic device 20 based on at least one of the number of call rejections and the number of call completions corresponding to the second electronic device 20.

For example, the first electronic device 10 may determine that at least one of a privacy level where the number of call rejections is less than or equal to a threshold value or is at a minimum value, a privacy level where the number of call completions is greater than or equal to a threshold value or is at a maximum value, or a privacy level where a ratio of the number of call completions to the number of call rejections is less than or equal to a threshold value or is at a minimum value .

When the first electronic device 10 performs a call, the first electronic device 10 may display information about the recommended privacy level to the user.

The information about the recommended privacy level may be used for a privacy configuration for a next call. For example, when the user of the first electronic device 10 performs the call with the second electronic device 20, the first electronic device 10 may provide the user with a privacy configuration corresponding to the recommended privacy level.

In an embodiment, at least one of operations S910a to S950a and operations S910b and S920b may be performed simultaneously or in a different order than illustrated. In an embodiment, at least one of operations S910a to S950a and operations S910b and S920b may be omitted or performed by another device such as a separate server or system.

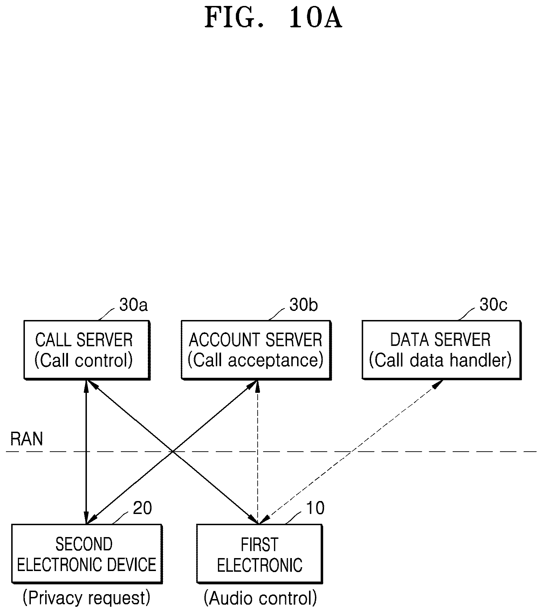

FIG. 10A is a diagram illustrating a network performing a privacy call, according to an embodiment of the present disclosure.

Privacy levels and privacy configurations may be set up and managed by the network 30, such as a service provider.

The second electronic device 20 may transmit a privacy request to the network 30.

The network 30 may store and manage privacy configurations. The network 30 may include at least one of a call server 30a, an account server 30b, and a data server 30c. The call server 30a may manage a configuration related to call control. The account server 30b may manage a configuration related to call acceptance. The data server 30c may manage a configuration related to call data handling.

The network 30 may configure call control by using the call server. The network 30 may determine a call acceptance condition by using the account server 30b. The network 30 may handle call data by using the data server 30c. The first electronic device 10 may manage a configuration related to audio control.

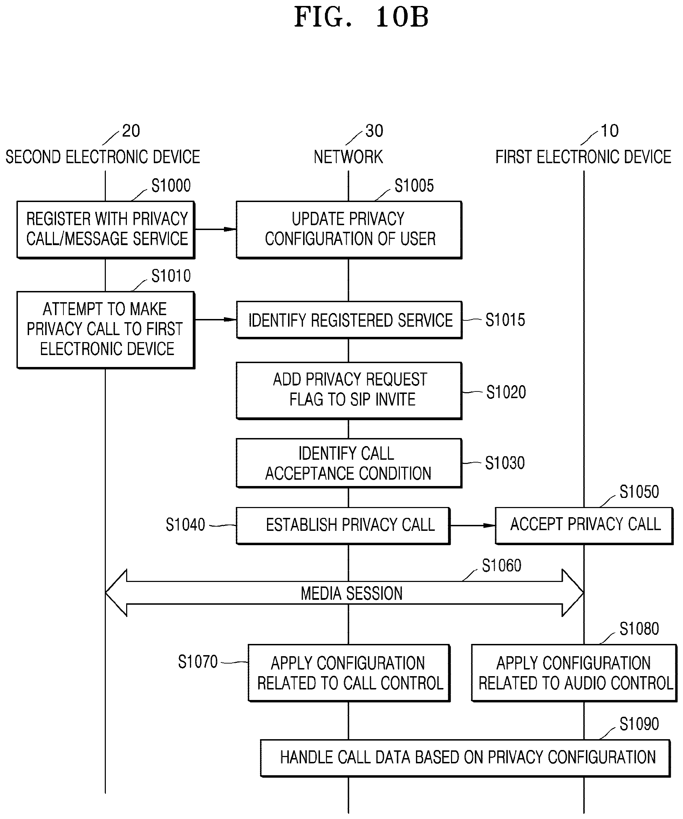

FIG. 10B is a diagram illustrating the network 30 performing a privacy call, according to an embodiment of the present disclosure.

In operation S1000, the second electronic device 20 may register with a privacy service including at least one of a privacy call service and a privacy message service.

The second electronic device 20 may transmit, to the network 30, a registration request message regarding a privacy service, which includes registration information. The registration information of the second electronic device may include information about a privacy level or a privacy configuration. The privacy service may correspond to at least one privacy level or privacy configuration.

In operation S1005, the network 30 may update a privacy configuration of the second electronic device 20.

The network 30 may update the privacy configuration corresponding to the second electronic device 20 based on registration information of the second electronic device 20.

For example, when the registration information indicates a first privacy level or a first privacy configuration, the network 30 may update the privacy configuration to a privacy configuration corresponding to the first privacy level or with the first privacy configuration.

In operation S1010, the second electronic device 20 may attempt to make a privacy call to the first electronic device 10.

The second electronic device 20 may transmit a SIP message to the first electronic device 10 via the network 30. For example, the second electronic device 20 may attempt to make a privacy call to the first electronic device 10 by using a SIP INVITE message.

In operation S1015, the network 30 may identify a privacy service registered to the second electronic device 20.

The network 30 may identify a privacy configuration of the second electronic device based on a registered service of the second electronic device 20.

In operation S1020, the network 30 may include a privacy request flag in the SIP INVITE message.

Messages that can have a privacy request flag added are not limited to a SIP INVITE message, but may also include other messages such as a SIP RE-INVITE message and a SIP UPDATE message.

In operation S1030, the network 30 may identify a call acceptance condition.

Based on a configuration related to call acceptance corresponding to the registered privacy service, the network 30 may determine whether the call acceptance condition is satisfied.

The determining, by the network 30, of the call acceptance condition may correspond to the determining, by the first electronic device 10, of the call acceptance condition described with reference to FIGS. 6A, 6B, and 6C, and repeated descriptions may be omitted.

The first electronic device 10 may transmit, to the second electronic device 20, a response message indicating whether the call acceptance condition is satisfied. The response message may include at least one of a SIP 180 message or a SIP 183 message.

In operation S1040, the network 30 may establish a privacy call.

In operation S1050, the first electronic device 10 may accept the privacy call from the second electronic device 20.

The first electronic device 10 may identify whether to accept the privacy call from the second electronic device 20 based on a user input.

In operation S1060, a media session between the first electronic device 10 and the second electronic device 20 may proceed.

In operation S1070, the network 30 may apply a configuration related to call control.

The network 30 may apply the configuration related to call control based on the privacy configuration. The privacy configuration may include a configuration related to call control. The configuration related to call control may include information indicating whether to disable (or deactivate)/enable (or activate) at least one of a call forwarding function, a call transferring function, a call continuity function, a video call function, a voice call function, or an RCS function.

The applying, by the network 30, of the configuration related to call control may correspond to operation S440a, and repeated descriptions may be omitted.

When the configuration related to call control indicates that the call forwarding function is to be disabled (or deactivated), forwarding of a ringing call from the first electronic device 10 to another electronic device or another phone number may be disabled (or deactivated). Based on the privacy request message, the network 30 may control the call forwarding function to be disabled (or deactivated), or trigger a disable request to the first electronic device 10.

When the configuration related to call control indicates that the call transferring function is to be disabled (or deactivated), transferring of a connected call from the first electronic device 10 to another electronic device or another phone number may be disabled (or deactivated). Based on the privacy request message, the network 30 may control the call transferring function to be disabled (or deactivated), or trigger a disable request to the first electronic device 10.

When the configuration related to call control indicates that the call continuity function is to be disabled (or deactivated), the network 30 may disable (or deactivate) sharing of a connected call from the first electronic device 10 to another electronic device or another phone number.

In operation S1080, the first electronic device 10 may apply a configuration related to audio control.

The first electronic device 10 may configure at least one of a configuration for a speaker of the first electronic device 10, a configuration for a device connected by wire to the first electronic device 10, a configuration for a device connected wirelessly thereto, and other audio configurations.

The applying of the configuration related to audio control may correspond to operation S470a, and repeated descriptions may be omitted.

In operation S1090, call data may be processed based on the privacy configuration.

A configuration related to call data handling includes at least one of a configuration for call recording processing and a configuration for call log history processing.

The network 30 and the first electronic device 10 may erase call data, encrypt call data, or move call data to a secure region.

The handling of call data by the network 30 and the first electronic device 10 may correspond to the contents of FIGS. 9A and 9B, and repeated descriptions may be omitted.

In an embodiment, at least one of operations S1000 to S1090 may be performed simultaneously or in a different order than illustrated. In an embodiment, at least one of operations S1000 to S1090 may be omitted or performed by another device such as a separate server or system.

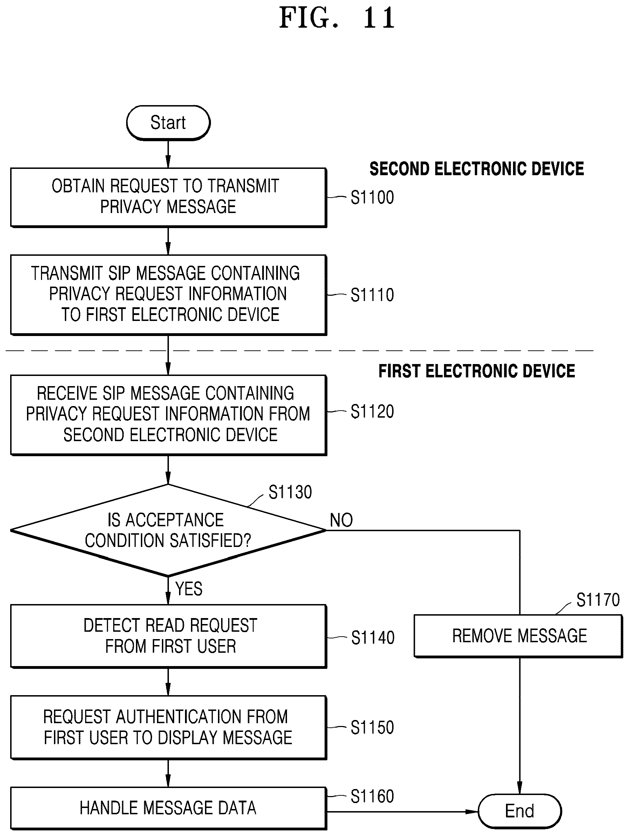

FIG. 11 is a diagram illustrating a privacy message service, according to an embodiment of the present disclosure.

In operation S1100, the second electronic device 20 obtains a request to transmit a privacy message from a user of the second electronic device 20.

The second electronic device 20 may identify whether it is needed to transmit the privacy message, based on a user input. The second electronic device 20 may identify an input by the user of the second electronic device 20. When the user input corresponds to a privacy message request, the second electronic device 20 may determine that it is needed to transmit the privacy message to the first electronic device 10.

In operation S1110, the second electronic device 20 transmits a SIP message containing privacy request information to the first electronic device 10.

The privacy message may be transmitted using a SIP message. A message header in the privacy message may include the privacy request information. The privacy request information may include information about a privacy level. Operation S1110 may correspond to operation S210, and repeated descriptions may be omitted.

In operation S1120, the first electronic device 10 receives, from the second electronic device 20, the SIP message containing the privacy request information.

The first electronic device 10 may identify a privacy configuration corresponding to a privacy request. The identifying of the corresponding privacy configuration may correspond to operation S220.

In operation S1130, the first electronic device 10 may determine whether an acceptance condition is satisfied.

The determining, by the first electronic device 10, of the acceptance condition may correspond to operation S230, operation S430a, and the determining of the call acceptance condition in FIGS. 6A, 6B, and 6C, and repeated descriptions may be omitted.

In operation S1140, the first electronic device 10 may determine whether a read request is detected from a user of the first electronic device 10.

When the acceptance condition is satisfied, the first electronic device 10 may request a user input regarding whether to request a read from the user of the first electronic device 10. The first electronic device 10 may identify whether there is a read request input from the user of the first electronic device 10.

In operation S1150, the first electronic device 10 may request authentication from the user to display a message.

When there is a read request input from the user, the first electronic device 10 may request authentication from the user. The first electronic device 10 may display the message to the user based on a response to the authentication request. When the user fails the authentication, the first electronic device 10 may not display the message, but may instead encrypt the message, delete the message, or move the message to a secure region.

In operation S1160, the first electronic device 10 handles message data.

After displaying the message to the user, the first electronic device 10 may handle the message data. The message data may include at least one of information about a sender of the message, information about a message history, and message content. The privacy configuration may include a configuration related to message data handling.

The first electronic device 10 may handle message data by erasing the message data, encrypting the message data, or moving the message data to a secure region.

When a call with the second electronic device 20 is terminated, the first electronic device 10 may update privacy level information corresponding to the second electronic device 20. The privacy level information may include at least one of information about a call cancellation history corresponding to at least one privacy level, or information about a call completion history corresponding to the at least one privacy level.

Based on the privacy level information, information about a recommended privacy level corresponding to the second electronic device 20 may be obtained. The handling of message data may correspond to the contents of FIGS. 9A and 9B, and repeated descriptions may be omitted.

In operation S1170, the first electronic device 10 removes the message.

When the acceptance condition is not satisfied or the user fails authentication, the first electronic device 10 may remove or encrypt the message,

In an embodiment, at least one of operations S1100 to S1170 may be performed simultaneously or in a different order than illustrated. In an embodiment, at least one of operations S1100 to S1170 may be omitted or performed by another device such as a separate server or system.

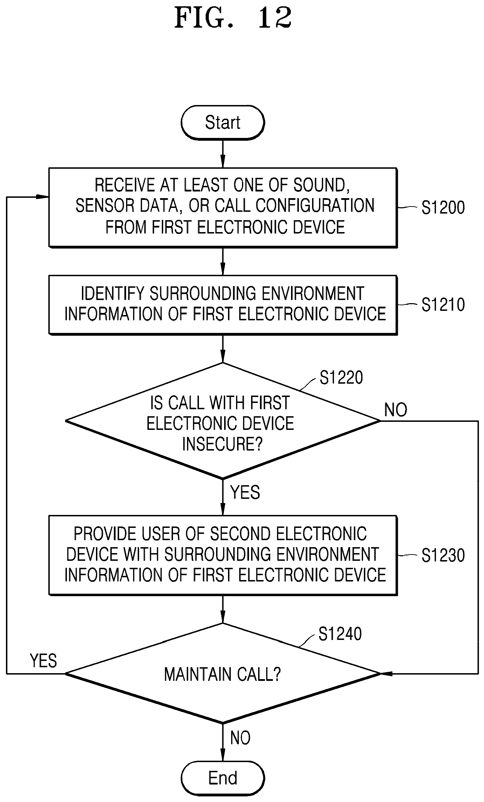

FIG. 12 is diagram illustrating a second electronic device performing a privacy call, according to an embodiment of the present disclosure.

In operation S1200, the second electronic device 20 receives at least one of sound information, sensor data, or call configuration from the first electronic device 10.

The second electronic device 20 may identify whether the first electronic device 10 supports a privacy configuration.

When the first electronic device 10 does not support the privacy configuration, the second electronic device 20 may transmit, to the first electronic device 10, a message requesting at least one of sound information, sensor data, or call configuration.

The sensor data is data obtained by the first electronic device (10) using a sensor, and the sensor may include an image sensor, a sound sensor, an acceleration sensor, a gyro sensor, a microphone sensor, a fingerprint sensor, and a VPU sensor, and is not limited to the stated examples.

In operation S1210, the second electronic device 20 may identify surrounding environment information of the first electronic device 10.

The second electronic device 20 may identify the surrounding environment information of the first electronic device 10, based on the at least one of the sound information, the sensor data, or the call configuration.

The surrounding environment information may include at least one of information indicating whether an unusual sound is detected, information indicating whether the surrounding environment is an open space or a closed space, or information indicating whether a person other than the user or owner of the first electronic device 10 is present.

By analyzing the sound information, sensor data, or call configuration, the second electronic device may identify whether a person other than the user of the first electronic device is present, whether the surrounding environment is an open space or a public space, and whether an unusual sound is detected.

In operation S1220, the second electronic device 20 may determine whether a call with the first electronic device 10 is secure.

The second electronic device 20 may identify an appropriate privacy protection level based on the surrounding environment information. The appropriate privacy level may indicate the degree of protection required or a level of protective actions needed to protect privacy in the surrounding environment.

For example, when the surrounding environment information indicates that there is another person, the first electronic device 10 may determine the appropriate privacy level as{high}. When the surrounding environment information indicates that there is no one else in a closed space, the first electronic device 10 may determine the appropriate privacy level as {low}.

When the appropriate privacy level is greater than or equal to a threshold level or when an unusual sound or noise is detected, the second electronic device 20 may determine that the call with the first electronic device 10 is not secure.

In operation S1230, the second electronic device 20 may provide the user of the second electronic device 20 with information about the surrounding environment of the first electronic device 10.

The second electronic device 20 may provide the user of the second electronic device with the surrounding environment information, such as information about whether an unusual sound is detected and information about the appropriate privacy level.

When the call is not secure, the second electronic device 20 may provide warnings or notifications regarding the surrounding environment information, or information about needed actions corresponding to the surrounding environment information.

The notifications or needed actions may correspond to at least one appropriate privacy level (e.g., {high}).

Although examples of needed actions used are listed in [Table 4], [Table 4] shows only an exemplary structure, and the present disclosure is not limited to [Table 4].

**[Table 4]**

| Appropriate privacy level | Condition | Actions |
|---|---|---|
| Low | - No unusual sounds | - No notification to user |
| | | - Providing surrounding environment information |
| High | - Unusual sound detected | - Notification to user |
| | | - Providing surrounding environment information |

In operation S1240, the second electronic device 20 may identify whether to maintain the call. The second electronic device may request an input from the user regarding whether to maintain the call. The second electronic device may identify whether to maintain the call based on the user's input.

When the call is not maintained, the second electronic device may terminate the call with the first electronic device. When the call is maintained, the second electronic device may perform again at least one of operations S1200 to S1240. For example, the second electronic device may identify surrounding environment information of the first electronic device based on a received sound.

In an embodiment, when the user maintains the call, the second electronic device may omit at least one of operations S1200 to S1240 based on the user's configuration or input. For example, the second electronic device may stop the operations of receiving or analyzing sound, sensor data, or call configuration from the first electronic device. Battery efficiency may be improved by omitting at least one of operations S1200 to S1240.

In an embodiment, at least one of operations S1200 to S1240 may be performed simultaneously or in a different order than illustrated. In an embodiment, at least one of operations S1200 to S1240 may be omitted or performed by another device such as a separate server or system.

When a call made by the user of the second electronic device is affected by unusual sounds or noise, the second electronic device may analyze sound information, sensor data, or call configuration to suggest appropriate actions for privacy protection to the user. The second electronic device may contribute to preventing the user's concentration from being impaired by sounds or noise other than the content of the call.

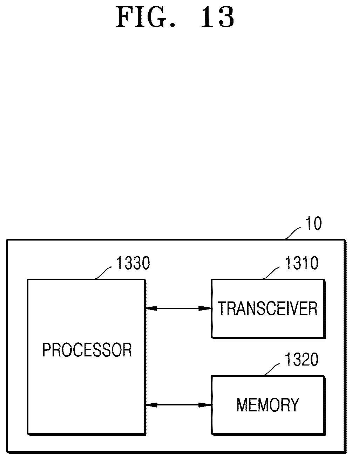

FIG. 13 is a diagram illustrating the configuration of a first electronic device according to an embodiment of the present disclosure.

Referring to FIG. 13, the first electronic device 10 of the present disclosure may include a transceiver 1310, a memory 1320, and a processor 1330. The processor 1330, the transceiver 1310, and the memory 1320 of the first electronic device 10 may operate according to a communication method of the first electronic device 10 described above. However, the components of the first electronic device 10 are not limited to the above example.

For example, the first electronic device 10 may include more or fewer components than those described above. The first electronic device 10 may include at least one of at least one speaker and at least one microphone. Furthermore, the processor 1330, the transceiver 1310, and the memory 1320 may be implemented as a single chip.

The transceiver 1310 is a collective term for a receiver of the first electronic device 10 and a transmitter of the first electronic device 10, and may transmit and receive signals to and from a base station or another network entity. A signal transmitted or received by the first electronic device 10 to and from the base station may include control information and data. For this purpose, the transceiver 1310 may include an RF transmitter for up-converting and amplifying a frequency of a signal to be transmitted and an RF receiver for low-noise amplifying a received signal and down-converting the frequency of the received signal. However, this is merely an embodiment of the transceiver 1310, and components of the transceiver 1310 are not limited to the RF transmitter and the RF receiver.

Furthermore, the transceiver 1310 may include a wired or wireless transceiver, and may include various components for transmitting and receiving signals.

Furthermore, the transceiver 1310 may receive a signal via a wireless channel and output the signal to the processor 1330 and transmit a signal output from the processor 1330 via a wireless channel.

In addition, the transceiver 1310 may receive a communication signal and output it to the processor 1330, and transmit a signal output from the processor 1330 to a home network (HN) or another network entity over a wired or wireless network.

The memory 1320 may store data and programs necessary for the operation of the first electronic device 10. Furthermore, the memory 1320 may store control information or data included in a signal obtained from the first electronic device 10. The memory 1320 may consist of a storage medium, such as read-only memory (ROM), random access memory (RAM), a hard disk, compact disc ROM (CD-ROM), and a digital versatile disc (DVD), or a combination of storage media.

The processor 1330 may control a series of processes such that the front electronic device 10 may operate according to the embodiment of the present disclosure. The processor 1330 may include at least one processor. For example, the processor 1330 may include a communication processor (CP) for performing control for communication and an application processor (AP) for controlling higher layers such as application programs.

The at least one processor 1330 may receive, from the second electronic device 20, a privacy call request message containing information about a first privacy level. The at least one processor 1330 may identify whether a privacy configuration corresponding to the first privacy level is supported. When the privacy configuration is supported, the at least one processor 1330 may perform a call with the second electronic device 20 based on the privacy configuration.

When the privacy configuration is not supported, the at least one processor 1330 may receive, from the second electronic device 20, a message indicating whether the second electronic device 20 will accept or reject a call.

The at least one processor 1330 may transmit, to the second electronic device 20, a message requesting a change of the first privacy level.

The at least one processor 1330 may receive, from the second electronic device 20, a privacy level change approval message containing information about a second privacy level different from the first privacy level. The at least one processor 1330 may perform a call with the second electronic device 20 based on a privacy configuration corresponding to the second privacy level.

The message requesting the change of the first privacy level may include information about the second privacy level that is different from the first privacy level.

The at least one processor 1330 may receive, from the second electronic device 20, a privacy level change approval message approving a change of a first privacy level to the second privacy level. The at least one processor 1330 may perform a call with the second electronic device 20 based on the privacy configuration corresponding to the second privacy level.

The at least one processor 1330 may determine, based on the privacy configuration, whether a call acceptance condition is satisfied. Based on whether the call acceptance condition is satisfied, the at least one processor 1330 may transmit a message including at least one of a SIP 180 message or a SIP 183 message to the second electronic device 20.

The at least one processor 1330 may configure an audio mode of the first electronic device 10 based on at least one of the privacy configuration, surrounding environment information of the first electronic device 10, or information about an audio device connected to the first electronic device 10.

The at least one processor 1330 may identify whether a person other than the user of the first electronic device 10 is present based on the surrounding environment information of the first electronic device 10. When the other person is identified as being present, the at least one processor 1330 may configure, based on the privacy configuration, at least one of disabling a speaker function of the first electronic device 10, adjusting an audio volume, or deactivating the connected audio device.

The at least one processor 1330 may receive the surrounding environment information of the first electronic device 10 from a device connected to the first electronic device 10.

The at least one processor 1330 may configure a display mode of the first electronic device 10 based on at least one of the privacy configuration, the surrounding environment information of the first electronic device 10, or information about a display device connected to the first electronic device 10.

The at least one processor 1330 may configure, based on the privacy configuration, call control regarding whether to disable (or deactivate) at least one of a call forwarding function, a call transferring function, a call continuity function, a function for upgrading to a video call, a function for downgrading to a voice call, or an RCS function.

Call data may include at least one of call log history information and call recording information.

The at least one processor 1330 may handle the call data by erasing the call data, encrypting the call data, or moving the call data to a secure region based on the privacy configuration.

When the call with the second electronic device 20 is terminated, the at least one processor 1330 may update privacy level information corresponding to the second electronic device 20.

The privacy level information may include at least one of information about a call cancellation history corresponding to at least one privacy level, or information about a call completion history corresponding to the at least one privacy level.

The at least one processor 1330 may obtain information about a recommended privacy level corresponding to the second electronic device 20 based on the privacy level information.

FIGF. 14 is a diagram illustrating the configuration of a second electronic device according to an embodiment of the present disclosure.

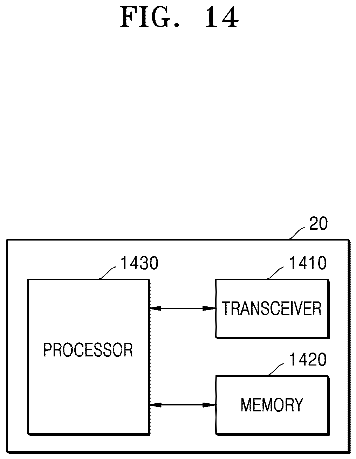

Referring to FIG. 14, the second electronic device 20 of the present disclosure may include a transceiver 1410, a memory 1420, and a processor 1430. The processor 1430, the transceiver 1410, and the memory 1420 of the second electronic device 20 may operate according to a communication method of the second electronic device 20 described above. However, the components of the second electronic device 20 are not limited to the above example. For example, the second electronic device 20 may include more or fewer components than those described above. Furthermore, the processor 1430, the transceiver 1410, and the memory 1420 may be implemented as a single chip.

The transceiver 1410 is a collective term for a receiver of the second electronic device 20 and a transmitter of the second electronic device 20, and may transmit and receive signals to and from a base station or another network entity. A signal transmitted or received by the second electronic device 20 to and from the base station may include control information and data. For this purpose, the transceiver 1410 may include an RF transmitter for up-converting and amplifying a frequency of a signal to be transmitted and an RF receiver for low-noise amplifying a received signal and down-converting the frequency of the received signal. However, this is merely an embodiment of the transceiver 1410, and components of the transceiver 1410 are not limited to the RF transmitter and the RF receiver.

Furthermore, the transceiver 1410 may include a wired or wireless transceiver, and may include various components for transmitting and receiving signals.

Furthermore, the transceiver 1410 may receive a signal via a wireless channel and output the signal to the processor 1430 and transmit a signal output from the processor 1430 via a wireless channel.

In addition, the transceiver 1410 may receive a communication signal and output it to the processor 1430, and transmit a signal output from the processor 1430 to a HN or another network entity over a wired or wireless network.

The memory 1420 may store data and programs necessary for the operation of the second electronic device 20. Furthermore, the memory 1420 may store control information or data included in a signal obtained from the second electronic device 20. The memory 1420 may consist of a storage medium, such as ROM, RAM, a hard disk, CD-ROM, and a DVD, or a combination of storage media.

The processor 1430 may control a series of processes such that the second electronic device 20 may operate according to the embodiment of the present disclosure. The processor 1430 may include at least one processor. For example, the processor 1430 may include a CP for performing control for communication and an AP for controlling higher layers such as application programs.

The at least one processor 1430 may transmit, to the first electronic device 10, a privacy call request message containing information about a first privacy level. When a privacy configuration corresponding to the first privacy level is supported, the at least one processor 1430 may perform a call with the first electronic device 10 based on the privacy configuration.

The at least one processor 1430 may receive, from the first electronic device 10, a message requesting a change of the first privacy level.

The at least one processor 1430 may transmit, to the first electronic device 10, a privacy call request message containing information about a second privacy level different from the first privacy level. The at least one processor 1430 may perform the call with the first electronic device 10 based on the privacy configuration corresponding to the second privacy level.

The message requesting the change of the first privacy level may include information about the second privacy level.

The at least one processor 1430 may transmit, to the first electronic device 10, a privacy level change approval message approving a change of the first privacy level to the second privacy level. The at least one processor 1430 may perform the call with the second electronic device 20 based on the privacy configuration corresponding to the second privacy level.

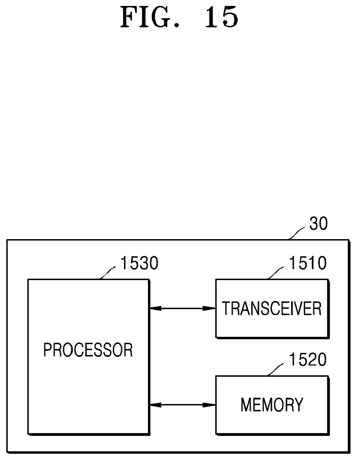

FIG. 15 is a diagram illustrating the configuration of a network according to an embodiment of the present disclosure.

Referring to FIG. 15, the network 30 of the present disclosure may include a transceiver 1510, a memory 1520, and a processor 1530. The processor 1530, the transceiver 1510, and the memory 1520 of the network 30 may operate according to a communication method of the network 30 described above. However, the components of the network 30 are not limited to the above-described example. For example, the network 30 may include more or fewer components than those described above. Furthermore, the processor 1530, the transceiver 1510, and the memory 1520 may be implemented as a single chip.

The transceiver 1510 is a collective term for a receiver of the network 30 and a transmitter of the network 30, and may transmit and receive signals to and from a base station or another network entity. A signal transmitted or received by the network 30 to and from the base station may include control information and data. For this purpose, the transceiver 1510 may include an RF transmitter for up-converting and amplifying a frequency of a signal to be transmitted and an RF receiver for low-noise amplifying a received signal and down-converting the frequency of the received signal. However, this is merely an embodiment of the transceiver 1510, and components of the transceiver 1510 are not limited to the RF transmitter and the RF receiver.

Furthermore, the transceiver 1510 may include a wired or wireless transceiver, and may include various components for transmitting and receiving signals.

Furthermore, the transceiver 1510 may receive a signal via a wireless channel and output the signal to the processor 1530 and transmit a signal output from the processor 1530 via a wireless channel.

In addition, the transceiver 1510 may receive a communication signal and output it to the processor 1530, and transmit a signal output from the processor 1530 to a HN or another network entity over a wired or wireless network.

The memory 1520 may store data and programs necessary for the operation of the network 30. Furthermore, the memory 1520 may store control information or data included in a signal obtained from the network 30. The memory 1520 may consist of a storage medium, such as ROM, RAM, a hard disk, CD-ROM, and a DVD, or a combination of storage media.

The processor 1530 may control a series of processes such that the network 30 may operate according to the embodiment of the present disclosure. The processor 1530 may include at least one processor. For example, the processor 1530 may include a CP for performing control for communication and an AP for controlling higher layers such as application programs.

A machine-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer in which data is temporarily stored.

According to an embodiment, methods according to various embodiments set forth herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

Hereinafter, the operation principle of a preferred embodiment of the present disclosure is described in detail with reference to the accompanying drawings. The same components in the drawings are shown with the same reference numbers wherever possible, even if they appear in different drawings, and in describing the present disclosure below, when it is determined that detailed descriptions of related known functions or configurations may unnecessarily obscure the essence of the present disclosure, the detailed descriptions will be omitted. Furthermore, terms described below are defined by taking into account functions described in the present disclosure and may vary depending on a user's or operator's intent or conventional practices. Therefore, definition of the terms should be made based on the overall descriptions in the present specification.

In addition, embodiments of the present disclosure may be applied to other communication systems having a technical background or channel configuration similar to that in the embodiments described below. **It** will also be understood by those skilled in the art that the embodiments of the present disclosure may be applied to other communication systems through some modifications that do not significantly depart from the scope of the present disclosure.

## Claims

1. A method, performed by a first electronic device (10), of performing communication in a wireless communication system, the method comprising:
receiving, from a second electronic device (20), a privacy call request message containing information about a first privacy level;
identifying whether a privacy configuration for privacy protection corresponding to the first privacy level is supported; and
when the privacy configuration is supported, performing a call with the second electronic device (20) based on the privacy configuration.

2. The method of claim 1, wherein the privacy configuration comprises at least one of a configuration related to call acceptance, a configuration related to audio control, a configuration related to display control, a configuration related to call control, or a configuration related to call data handling.

3. The method of claim 1, further comprising transmitting, to the second electronic device (20), a message requesting a change of the first privacy level.

4. The method of claim 3, further comprising:
receiving, from the second electronic device (20), a privacy level change approval message containing information about a second privacy level that is different from the first privacy level; and
performing a call with the second electronic device (20) based on a privacy configuration corresponding to the second privacy level.

5. The method of claim 3, wherein
the message requesting the change of the first privacy level includes information about the second privacy level that is different from the first privacy level, and
the method further comprises:
receiving, from the second electronic device (20), a privacy level change approval message approving a change of the first privacy level to the second privacy level; and
performing the call with the second electronic device (20) based on a privacy configuration corresponding to the second privacy level.

6. The method of claim 1, wherein
the performing of the call with the second electronic device (20) comprises:
determining, based on the privacy configuration, whether a call acceptance condition is satisfied; and
based on whether the call acceptance condition is satisfied, transmitting, to the second electronic device (20), a message including at least one of a Session Initiation Protocol (SIP) 180 message or a SIP 183 message.

7. The method of claim 1, wherein the performing of the call with the second electronic device (20) comprises configuring an audio mode of the first electronic device (10) based on at least one of the privacy configuration, surrounding environment information of the first electronic device (10), or information about an audio device connected to the first electronic device (10).

8. The method of claim 7, wherein
the configuring of the audio mode of the first electronic device (10) comprises:
identifying whether a person other than the user of the first electronic device (10) is present, based on the surrounding environment information of the first electronic device (10); and
when the other person is identified as being present, configuring, based on the privacy configuration, at least one of disabling a speaker function of the first electronic device (10), adjusting an audio volume, or deactivating the connected audio device.

9. The method of claim 8, further comprising receiving the surrounding environment information of the first electronic device (10) from a device connected to the first electronic device (10).

10. The method of claim 1, wherein the performing of the call with the second electronic device (20) comprises configuring a display mode of the first electronic device (10) based on at least one of the privacy configuration, the surrounding environment information of the first electronic device (10), or information about a display device connected to the first electronic device (10).

11. The method of claim 1, wherein the performing of the call with the second electronic device (20) comprises configuring, based on the privacy configuration, call control regarding whether to disable (or deactivate) at least one of a call forwarding function, a call transferring function, a call continuity function, a function for upgrading to a video call, a function for downgrading to a voice call, or a Rich Communication Services (RCS) function.

12. The method of claim 1, wherein
call data includes at least one of call log history information and call recording information, and
the performing of the call with the second electronic device (20) comprises handling the call data by erasing the call data, encrypting the call data, or moving the call data to a secure region based on the privacy configuration.

13. The method of claim 1, further comprising,
when the call with the second electronic device 20 is terminated, updating privacy level information corresponding to the second electronic device (20),
wherein the privacy level information comprises at least one of information about a call cancellation history corresponding to at least one privacy level or information about a call completion history corresponding to the at least one privacy level.

14. A method, performed by a second electronic device (20), of performing communication in a wireless communication system, the method comprising:
transmitting, to a first electronic device (10), a privacy call request message containing information about a first privacy level; and
when a privacy configuration corresponding to the first privacy level is supported, performing a call with the first electronic device (10) based on the privacy configuration.

15. A first electronic device (10) for performing communication in a wireless communication system, the first electronic device comprising:
a transceiver; and
at least one processor connected to the transceiver,
wherein the at least one processor is configured to
receive, from a second electronic device (20), a privacy call request message containing information about a first privacy level,
identify whether a privacy configuration for privacy protection corresponding to the first privacy level is supported, and
when the privacy configuration is supported, perform a call with the second electronic device (20) based on the privacy configuration.
